# EUROPÄISCHE PATENTSCHRIFT

(11) **EP 1 931 952 B1**
(45) Veröffentlichungstag und Bekanntmachung des Hinweises auf die Patenterteilung: **25.06.2014**
(21) Anmeldenummer: 06806949.1
(22) Anmeldetag: 03.10.2006
(51) Int. Cl.: G01F 13/00, B65B 39/00, B65B 39/12, B65B 1/32

(54) **DOSIEREINRICHTUNG FÜR PULVER- ODER PASTENFÖRMIGE SUBSTANZEN**
DOSING DEVICE FOR POWDERY OR PASTY SUBSTANCES
DISPOSITIF DE DOSAGE POUR SUBSTANCES PULVERULENTES OU PATEUSES

(30) Priorität: 03.10.2005 EP 05109151
(43) Veröffentlichungstag der Anmeldung: 18.06.2008
(73) Patentinhaber: Mettler-Toledo AG, 8606 Greifensee (CH)
(72) Erfinder: LÜCHINGER, Paul, CH-8610 Uster (CH); ZEISS, Siegfried, CH-8633 Wolfhausen (CH); EHRBAR, Sandra, CH-8605 Gutenswil (CH)
(86) Internationale Anmeldenummer: PCT/EP2006/067012
(87) Internationale Veröffentlichungsnummer: WO 2007/039614

(56) Entgegenhaltungen:
- EP-A- 0 201 777
- EP-A1- 1 582 467
- DE-A1- 19 841 478
- FR-A- 2 607 794
- FR-A- 2 682 083
- GB-A- 701 572
- GB-A- 1 601 568
- JP-A- 60 052 724

## Beschreibung

Die Erfindung betrifft eine Dosiereinrichtung für pulver- oder pastenförmige Substanzen, welche einen mit einem Quell- oder Entnahmegefäss verbindbaren oder mit diesem verbundenen Dosierkopf aufweist.

Solche Dosiereinrichtungen finden insbesondere beim Dosieren kleiner Mengen, beispielsweise toxischer Substanzen, mit hoher Präzision in kleine Zielgefässe Verwendung. Häufig sind solche Zielgefässe auf einer Waage platziert, um die Menge der aus der Dosiereinrichtung ausgetragenen Substanz zu verwiegen, so dass sie anschliessend bestimmungsgemäss weiter verarbeitet werden kann.

Die zu dosierende Substanz befindet sich beispielsweise in einem Entnahmegefäss, welches mit dem Dosierkopf in Verbindung steht und für das Dosieren mit diesem eine Einheit - die Dosiereinrichtung - bildet. Dabei ist es wünschenswert, die zu dosierende Substanz durch eine kleine Öffnung der Dosiereinrichtung auszutragen, so dass sie auch gezielt in ein Gefäss mit einem kleinen Öffnungsquerschnitt abgefüllt werden kann.

Dosiereinrichtungen für trockenes und/oder pulverförmiges Schüttgut, beispielsweise Farbstoffpulver sind bekannt und im Einsatz. So wird in der US 5 145 009 A eine Vorrichtung zum Dosieren beschrieben, die aus einem Ausgabebehälter mit einem verschliessbaren Auslass an seiner Unterseite besteht. Als Verschluss dient ein kegelförmiger, sich nach oben verjüngender zum Öffnen einer Austrittöffnung vertikal nach unten verstellbarer Ventilkörper, der in seiner Offenstellung rotiert und Mittel zum Fördern des Gutes in Richtung der Auslassöffnung besitzt.

Die beschriebene Einrichtung eignet sich weniger gut für das Dosieren von Schüttgut in Gefässe mit einem kleinen Öffnungsquerschnitt. Die sich nach oben verjüngende Struktur des Ventilkörpers sowie dessen Rotation ergeben eine Radial- bzw. Horizontalkomponente der Schüttgutpartikel am Auslass und verursachen demzufolge eine Streuung, die selbst über einen relativ breiten Öffnungsquerschnitt eines abzufüllenden Gefässes hinausreichen kann.

Ein Verfahren und eine Vorrichtung zum Austragen einer pulver- oder pastenförmigen Kleinstmengenprobe, beispielsweise für die Atomabsorptionsspektroskopie, offenbart die US 4 905 525 A. In einem Vorratsbehälter mit einer Auslassöffnung am Ende eines Formkanals ragt von oben her ein Stempel in das im Behälter befindliche Probenmaterial. Eine kleine Probenmenge wird durch den Formkanal gepresst und aus der Auslassöffnung ausgetragen, indem der Stempel in das Probenmaterial gedrückt wird, so dass es sich oberhalb des Formkanals verdichtet. In einer speziellen Ausführungsform ist der Behälter zur Auslassöffnung hin trichterförmig ausgebildet und der Stempel ist schräg zur Auslassöffnung angeordnet.

In der DE 198 41 478 A1 ist eine Dosiereinrichtung zum Abfüllen von viskosen, pastösen, pulverförmigen oder granulatförmigen Produkten beschrieben, mit einem Dosierbehälter, der in der für den Betrieb positionierten Dosiereinrichtung sich zu seinem unteren Ende hin verjüngt und eine dort angeordnete Austrittsöffnung aufweist. An einer zentral angeordneten rotierbar ausgestalteten Hohlwelle sind Abstreifwerkzeuge befestigt. Die Dosiereinrichtung verfügt über ein Dosierventil, das eine in der Hohlwelle angeordnete und translatorisch auf und ab bewegbare Ventilstange aufweist, an deren unterem Ende ein kegelförmig sich nach oben verjüngender Ventilkopf angeordnet ist, so dass die Austrittsmenge des Abfüllguts geregelt und die Austrittsöffnung von oben her geschlossen werden kann. In einigen der beschriebenen Ausführungsformen ist auch das Dosierventil rotierbar ausgebildet.

Bei einer Dosiereinrichtung gemäss der DE 198 41 478 A1 oder gemäss der US 5 145 009 A kann die aus dem Behälter auszutragende Menge nicht beliebig klein gehalten werden. Da die Austrittsöffnung ringförmig ist, ist die minimal zum Dosieren verwendbare Breite des Ringspaltes auf mindestens die Ausdehnung einer kleinsten Schüttguteinheit - beispielsweise eines Pulverkorns - begrenzt, wodurch gleichzeitig mehrere Schüttguteinheiten aus dem Ringspalt austreten können. Ferner besteht die Gefahr, dass je nach Beschaffenheit des Schüttgutes ein Teil des Spalts verstopft werden kann. Dies kann insbesondere dann erfolgen, wenn gegen Ende des Dosiervorgangs durch Reduktion der Breite des Ringspalts die Austragungsrate reduziert werden soll, da dabei dessen Breite im Verhältnis zu dessen Länge beziehungsweise Umfang stetig ungünstiger wird.

Die Schrift JP6005724 A offenbart eine Dosiereinheit für pulverförmiges Material mit einem trichterförmigen Oberteil, welches in ein zylinderförmiges Unterteil mündet. Im Unterteil sind ein Austragungselement und ein quantitatives Dosierelement, die entlang einer gemeinsamen Achse verschiebbar und um diese rotierbar sind, an einem Schaft angeordnet. Eine um den Schaft angeordnete Schraube ist ebenfalls um diese Achse rotierbar ausgestaltet.

Die FR2607794 A1 zeigt ebenfalls eine Dosiereinheit für pulverförmiges Material mit einem trichterförmigen Oberteil, welches in ein zylinderförmiges Unterteil mündet. Ein an einem Schaft befestigtes Verschlusselement ist rotierbar und in Längsrichtung des Schafts mit diesem verschiebbar ausgestaltet. Mittels des Verschlusselements ist eine Austrittsöffnung verschliessbar, wobei diese Austrittsöffnung in ein unten an das zylinderförmige Unterteil befestigbares Ansatzstück angebracht ist. Die Dosiereinheit weist ferner eine um den Schaft angeordnete Schraube auf.

Aufgabe der Erfindung ist es, eine Dosiereinrichtung zur Verfügung zu stellen, mit welcher Kleinstmengen von pulver- oder pastenförmigen Substanzen gezielt in ein Gefäss eingefüllt werden können. Eine weitere Aufgabe besteht darin, stark koagulierende Substanzen oder Pasten mit der Dosiereinrichtung austragen zu können.

Diese Aufgabe wird gelöst durch die Merkmale des unabhängigen Anspruchs 1.

Eine Dosiereinrichtung für pulver- oder pastenförmige Substanzen ist mit einem Entnahmegefäss und einem damit verbundenen oder verbindbaren Dosierkopf versehen, der ein Gehäuse aufweist, welches eine mit kreisförmigem Querschnitt versehene Austrittsöffnung besitzt. Ferner weist der Dosierkopf ein Austragungs- und Verschlusselement auf, welches einen dem Verschliessen der Austrittsöffnung dienenden Verschlussbereich umfasst. Es ist ein Zufuhrwerkzeug, welches mindestens ein der Zuleitung der Substanz zur Austrittsöffnung dienendes Zufuhrelement umfasst, vorhanden. Die Austrittsöffnung und das Austragungs- und Verschlusselement sind auf der Mittellängsachse des Dosierkopfs angeordnet. Das Zufuhrwerkzeug ist relativ zum Gehäuse um die Mittellängsachse rotierbar und damit das mindestens eine Zufuhrelement auf einer Kreisbahn um die Mittellängsachse bewegbar ausgestaltet. Das Austragungs- und Verschlusselement umfasst einen der Austragung von zu dosierender Substanz dienenden Austragungsbereich und ist relativ zum Gehäuse um die Mittellängsachse rotierbar und ist entlang der Mittellängsachse relativ zur Austrittsöffnung translatorisch verschiebbar ausgestaltet, kann demnach aus der Austrittsöffnung, beziehungsweise in die Austrittsöffnung ausund eingefahren werden. Das mindestens eine Zufuhrelement des Zufuhrwerkzeugs ist für das Austragen von Substanz unter einem spitzen Winkel zur Ebene seiner Kreisbahn in seiner Drehrichtung geneigt.

Durch eine translatorische Verschiebung des Austragungs- und Verschlusselements entlang der Mittellängsachse der Dosiereinrichtung kann eine wirksame Austrittsöffnung, das heisst der Bereich der Austrittsöffnung, durch welchen im Dosierbetrieb die auszutragende Substanz aus der Dosiereinrichtung gelangt, also mindestens eine Durchtrittsöffnung, kontinuierlich in definierter Weise vergrössert beziehungsweise verkleinert werden. Eine variable Durchtrittsöffnung ermöglicht ein Austragen grösserer oder kleiner Substanzmengen je nach Bedarf. Insbesondere können kleinste Substanzmengen, beispielsweise Pulver im Mikrogrammbereich, ausgetragen werden. Während eines Dosiervorgangs kann somit zunächst bei relativ grosser Durchtrittsöffnung eine grosse Substanzmenge ausgetragen werden und bei Annäherung an eine vorgegebene Zielmenge durch die Translationsbewegung des Austragungs- und Verschlusselements die mindestens eine Durchtrittsöffnung derart verkleinert werden, dass nurmehr noch wenig Substanz ausgetragen wird und das Erreichen der Zielmenge äusserst genau erfolgen kann. Vermittels des Zufuhrwerkzeugs wird zudem die auszutragende Substanz der Austrittsöffnung zugeführt, indem sie durch die Form und Anordnung des Zufuhrwerkzeugs im Dosierkopf eine Kraftkomponente nach unten erfährt und gewissermassen aus der Durchtrittsöffnung gepresst wird. Gleichzeitig bewirkt das Zufuhrwerkzeug auch eine Auflockerung der Substanz, insbesondere, wenn es sich dabei um ein Pulver handelt.

Dadurch, dass das Zufuhrwerkzeug relativ zum Austragungs- und Verschlusselement entlang der Mittellängsachse translatorisch bewegbar gelagert und geführt ist, befindet es sich im Betriebszustand der Dosiereinrichtung stets in losem Kontakt mit der die Austrittsöffnung umgebenden Kante des Gehäuses, im Folgenden als Rand der Austrittsöffnung bezeichnet. Es ist somit gewährleistet, dass auch bei kleinster Durchtrittsöffnung immer genügend zu dosierende Substanz derselben zugeführt wird. Daher ist es im Zusammenwirken von Zufuhrwerkzeug und Austragungs- und Verschlusselement möglich, stark koagulierende Pulver sowie Pulver mit geladenen Partikeln oder Pasten zu dosieren, indem diese Substanzen aufgelockert, der Durchtrittsöffnung kontrolliert zugeführt und vom Rand der Austrittsöffnung abgestreift werden.

Das Zufuhrwerkzeug weist mindestens ein Zufuhrelement auf, dessen flächiger Bereich unter einem spitzen Winkel zum Radius seiner Kreisbahn ausgerichtet ist und die die Austrittsöffnung umgebende Kante des Gehäuses, im Folgenden als Rand der Austrittsöffnung bezeichnet, tangential berührt.

Die Richtung der Rotation des Austragungs- und Verschlusselement sowie des Zufuhrwerkzeugs ist durch die Ausgestaltung des Austragungsbereichs und/oder die Anordnung und Ausgestaltung des mit dem Austragungsbereich zusammenwirkendem Zufuhrwerkzeugs vorgegeben.

In einer bevorzugten Ausgestaltung des Zufuhrwerkzeugs umfasst das mindestens eine Zufuhrelement einen flächigen Bereich, welcher bevorzugt in einer Richtung oder in zwei Richtungen eine schaufelartige Krümmung aufweist.

Alternativ oder gleichzeitig kann das Zufuhrelement unter einem spitzen Winkel gegenüber der Mittellängsachse geneigt sein. Diese Massnahmen, insbesondere wenn kombiniert, verbessern im hohen Masse das Austragen von pappigen Pulvern oder pastösen Substanzen.

In einer vorteilhaften Ausgestaltung des mindestens einen Zufuhrelements des Zufuhrwerkzeugs weist dieses eine Spitze auf, die im Betriebszustand der Dosiereinrichtung stets mit dem Rand der Austrittsöffnung in losem Kontakt ist. Insbesondere kann diese Spitze noch leicht zur Mittellängsachse hin gekrümmt sein.

Das Zufuhrelement kann auch an seiner der Austrittsöffnung zugewandten Kante eine Schneide aufweisen, wodurch beim Dosieren stark koagulierender Substanzen ein Festkleben derselben an der Austragungsöffnung oder am Austragungsbereich verhindert wird.

In einer weiteren vorteilhaften Ausgestaltung kann das Zufuhrwerkzeug mittels Federkraft gegen den Rand der Austrittsöffnung gedrückt werden und weist in spezieller Ausfertigung einen Federbügel als Zufuhrelement auf.

Das Austragungs- und Verschlusselement kann in vielfältiger Weise ausgestaltet sein. In bevorzugter Weise ist es in seiner Grundform zylinderförmig ausgebildet und weist einen dem Verschliessen der Austrittsöffnung dienenden zylinderförmigen Verschlussbereich und einen diesem benachbart angeordneten, der Austragung von zu dosierender Substanz dienenden Austragungsbereich auf. Der Austragungsbereich befindet sich im betriebsbereiten Zustand der Dosiereinrichtung im unteren Bereich des Austragungs- und Verschlusselements, wobei die dort befindliche Endfläche gegenüber einer Ebene orthogonal zur Mittellängsachse schräg verläuft. Dabei bildet der tiefstgelegene Punkt dieser Endfläche eine Spitze, indem sie mit einem Punkt der Zylindermantelfläche zusammenfällt, wobei der höchstgelegene Punkt ebenfalls mit einem Punkt der Zylindermantelfläche zusammenfällt.

In einer weiteren vorteilhaften Ausgestaltung ist das Austragungs- und Verschlusselement in seiner Grundform zylinderförmig ausgebildet und weist mindestens einen dem Verschliessen der Austrittsöffnung dienenden zylinderförmigen Verschlussbereich und einen diesem benachbart angeordneten, der Austragung von zu dosierender Substanz dienenden Austragungsbereich mit mindestens einer von der Zylindermantelfläche ausgehenden Vertiefung auf.

Der Austragungsbereich des Austragungs- und Verschlusselements weist demnach eine Form auf, die für ein sich mit seinem Austragungsbereich in der Austrittsöffnung befindlichen Austragungs- und Verschlusselement mindestens eine aussermittig angeordnete und nicht konzentrisch ausgebildete wirksame Austrittsöffnung, das heisst eine Durchtrittsöffnung freilässt. Durch eine translatorische Verschiebung des Austragungs- und Verschlusselements entlang der Mittellängsachse der Dosiereinrichtung kann die Durchtrittsöffnung, das heisst ein Bereich der Austrittsöffnung, durch welchen im Dosierbetrieb die auszutragende Substanz aus der Dosiereinrichtung gelangt, kontinuierlich in definierter Weise vergrössert beziehungsweise verkleinert werden. Ausserdem wird ihre Orientierung bezüglich der Mittellängsachse durch Rotation ständig verändert.

Diese variable wirksame Austrittsöffnung oder Durchtrittsöffnung ermöglicht ein Austragen grösserer oder kleiner Substanzmengen je nach Bedarf. Insbesondere können kleinste Substanzmengen, beispielsweise Pulver im Mikrogrammbereich, ausgetragen werden. Während eines Dosiervorgangs kann somit zunächst bei relativ grosser Durchtrittsöffnung eine grosse Substanzmenge ausgetragen werden und bei Annäherung an eine vorgegebene Zielmenge durch die Translationsbewegung des Austragungs- und Verschlusselements die Durchtrittsöffnung derart verkleinert werden, dass nurmehr noch wenig Substanz ausgetragen wird und das Erreichen der Zielmenge äusserst genau erfolgen kann. Die Durchtrittsöffnung weist somit, sofern die Austrittsöffnung nicht vollständig verschlossen ist, immer einen definierten Querschnitt auf, optimiert auf die zu dosierende Substanz.

Die mindestens eine von der Zylindermantelfläche ausgehende Vertiefung des Austragungsbereichs kann in Form einer Aussparung und/oder einer Nut und/oder einer Kerbe ausgebildet sein. Insbesondere variiert die Breite und die Tiefe der jeweiligen Vertiefung derart, dass sie zum Verschlussbereich hin kleiner wird.

In spezifischer Ausformung ist das Austragungs- und Verschlusselement mit einer entlang der Mittellängsachse angeordneten Stange, welche das Entnahmegefäss als Antriebswelle durchdringt, verbunden, wobei das Zufuhrwerkzeug an der Stange und relativ zu dieser und damit zum Austragungs- und Verschlusselement translatorisch entlang der Mittellängsachse verschiebbar gelagert und/oder geführt ist.

Zur Lagerung und Führung des Zufuhrwerkzeugs an der Stange weist dieses eine Haltevorrichtung auf, mit welcher es die Stange an zwei übereinander angeordneten Positionen ringförmig umgreift, wodurch das Zufuhrwerkzeug mit der Stange lose verbunden ist. Alternativ kann ein Bereich der Stange mit einer oder mit zwei sich über ihre gesamte Länge erstreckenden Nuten versehen sein und das Zufuhrwerkzeug einen Haltering aufweisen, der lose um die Stange angeordnet ist und mit zwei Zapfen in die Nuten eingreift. Im Bereich der Nuten kann die Stange gegenüber ihren übrigen Bereichen - einen Mitnahmebereich bildend - einen vergrösserten Durchmesser aufweisen.

Prinzipiell können das Austragungs- und Verschlusselement und das Zufuhrwerkzeug unabhängig von einander bewegbar beziehungsweise antreibbar sein.

In einer besonders bevorzugten Weiterbildung weist die Dosiereinrichtung ein Gehäuse auf, welches sich in Richtung zur Austrittsöffnung hin verjüngt

Die Dosiereinrichtung wird anhand von Beispielen, wie sie schematisch in den Zeichnungen dargestellt sind, im Folgenden beschrieben. Es zeigen:
- Figur 1: eine Dosiereinrichtung mit einem auf ein Entnahmegefäss aufgeschraubten Dosierkopf in dreidimensionaler Darstellung;
- Figur 2a: einen Dosierkopf mit einer ersten Ausführungsform des Austragungs- und Verschlusselements in der Offenstellung und mit einer ersten Ausführungsform des Zufuhrwerkzeugs in dreidimensionaler Darstellung, wobei das Gehäuse der Länge nach aufgeschnitten ist;
- Figur 2b: einen Dosierkopf mit einer ersten Ausführungsform des Austragungs- und Verschlusselements in der Geschlossenstellung und mit einer ersten Ausführungsform des Zufuhrwerkzeugs in dreidimensionaler Darstellung, wobei das Gehäuse der Länge nach aufgeschnitten ist;
- Figur 3a: einen Dosierkopf mit einer zweiten Ausführungsform des Austragungsund Verschlusselements in der Offenstellung in dreidimensionaler Darstellung, wobei das Gehäuse der Länge nach aufgeschnitten ist;
- Figur 3b: einen Dosierkopf mit einer zweiten Ausführungsform des Austragungsund Verschlusselements in der Geschlossenstellung in dreidimensionaler Darstellung, wobei das Gehäuse der Länge nach aufgeschnitten ist;
- Figur 4: den Dosierkopf aus Figur 3b, wobei ein Zufuhrwerkzeug in der ersten Ausführungsform vorhanden ist;
- Figur 5a: einen Schnitt durch den Dosierkopf aus Figur 4 mit dem Austragungs- und Verschlusselements in der Offenstellung;
- Figur 5b: einen Schnitt durch den Dosierkopf aus Figur 4, wobei das Austragungs-und Verschlusselement in der Geschlossenstellung gezeigt ist;
- Figur 6a: einen Dosierkopf mit einer dritten Ausführungsform des Austragungs- und Verschlusselements in der Geschlossenstellung und mit einer zweiten Ausführungsform des Zufuhrwerkzeugs in dreidimensionaler Darstellung, wobei das Gehäuse der Länge nach aufgeschnitten ist;
- Figur 6b: eine Seitenansicht des Dosierkopfs aus Figur 6a, wobei dessen Gehäuse der Länge nach aufgeschnitten ist;
- Figur 6c: den Dosierkopf aus Figur 6a mit dem Austragungs- und Verschlusselement in der Offenstellung;
- Figur 6d: den Dosierkopf aus Figur 6b mit dem Austragungs- und Verschlusselement in der Offenstellung;
- Figur 7a: einen Dosierkopf mit einer vierten Ausführungsform des Austragungs- und Verschlusselements in der Geschlossenstellung und der Ausführungsform des Zufuhrwerkzeugs aus Figur 6a in dreidimensionaler Darstellung, wobei das Gehäuse der Länge nach aufgeschnitten ist;
- Figur 7b: eine Seitenansicht des Dosierkopfs aus Figur 7a, wobei dessen Gehäuse der Länge nach aufgeschnitten ist;
- Figur 8a: einen Dosierkopf mit einer fünften Ausführungsform des Austragungs- und Verschlusselements in der Geschlossenstellung und mit einer dritten Ausführungsform des Zufuhrwerkzeugs in dreidimensionaler Darstellung, wobei das Gehäuse der Länge nach aufgeschnitten ist;
- Figur 8b: eine Seitenansicht des Dosierkopfs aus Figur 8a, wobei dessen Gehäuse der Länge nach aufgeschnitten ist;
- Figur 9a: eine stark schematisiert Sicht von oben in einen Dosierkopf, wobei das dritte Austragungs- und Verschlusselement im Bereich der Austrittsöffnung 7 geschnitten gezeigt ist;
- Figur 9b: eine stark schematisiert Sicht von oben in einen Dosierkopf, wobei das vierte Austragungs- und Verschlusselement im Bereich der Austrittsöffnung geschnitten gezeigt ist;
- Figur 10a: einen Schnitt durch eine weitere Ausführungsform eines Dosierkopfs mit geöffneter Austrittsöffnung in der ersten Ausführungsform des Austragungs- und Verschlusselements und einer vierten Ausführungsform des Zufuhrwerkzeugs;
- Figur 10b: das mit einer Stange lose verbundene Zufuhrwerkzeug aus Figur 10a in dreidimensionaler Darstellung;
- Figur 11a: das Zufuhrwerkzeug aus den Figuren 6 und 7 in dreidimensionaler Darstellung aus der Sicht von schräg oben;
- Figur 11b: das Zufuhrwerkzeug aus den Figuren 6 und 7 in der Seitenansicht;
- Figur 12a: das Zufuhrwerkzeug aus der Figur 8 in dreidimensionaler Darstellung aus der Sicht von schräg oben;
- Figur 12b: das Zufuhrwerkzeug aus der Figur 8 in der Seitenansicht;
- Figur 13a: das erste Austragungs- und Verschlusselement seitlich mit Blick auf die Austragungsfläche;
- Figur 13b: das erste Austragungs- und Verschlusselement gegenüber der Darstellung von Figur 13a um 90° gedreht;
- Figur 13c: das erste Austragungs- und Verschlusselement in einer dreidimensionalen Darstellung;
- Figur 14a: eine sechste Ausgestaltung des Austragungs- und Verschlusselements seitlich mit Blick auf die Austragungsfläche;
- Figur 14b: eine sechste Ausgestaltung des Austragungs- und Verschlusselements gegenüber der Darstellung von Figur 14a um 90° gedreht;
- Figur 14c: eine sechste Ausgestaltung des Austragungs- und Verschlusselements in einer dreidimensionalen Darstellung;
- Figur 15a: die dritte Ausgestaltung des Austragungs- und Verschlusselements, wie sie in den Figuren 6a bis 6d gezeigt ist seitlich mit Blick auf die Austragungsfläche;
- Figur 15b: die dritte Ausgestaltung des Austragungs- und Verschlusselements gegenüber der Darstellung von Figur 15a um 90° gedreht;
- Figur 15c: die dritte Ausgestaltung des Austragungs- und Verschlusselements in einer dreidimensionalen Darstellung;
- Figur 15d: die dritte Ausgestaltung des Austragungs- und Verschlusselements in einer dreidimensionalen Darstellung;
- Figur 16a: die vierte Ausgestaltung des Austragungs- und Verschlusselements, wie sie in den Figuren 7a und 7b gezeigt ist, seitlich mit Blick auf die Austragu ngsfläche,
- Figur 16b: die vierte Ausgestaltung des Austragungs- und Verschlusselements in einer dreidimensionalen Darstellung;
- Figur 16c: die vierte Ausgestaltung des Austragungs- und Verschlusselements in einer Schnittdarstellung in einer orthogonal zur Mittellängsachse ausgerichteten Ebene im Bereich der Austrittsöffnung.
- Figur 17a: die fünfte Ausgestaltung des Austragungs- und Verschlusselements, wie sie in den Figuren 8a und 8b gezeigt ist, seitlich mit Blick auf die Austragungsfläche;
- Figur 17b: die fünfte Ausgestaltung des Austragungs- und Verschlusselements in einer dreidimensionalen Darstellung;
- Figur17c: die fünfte Ausgestaltung des Austragungs- und Verschlusselements in einer Schnittdarstellung in einer orthogonal zur Mittellängsachse ausgerichteten Ebene im Bereich der Austrittsöffnung;
- Figur 18a: eine siebte Ausgestaltung des Austragungs- und Verschlusselements, seitlich mit Blick auf die Austragungsfläche;
- Figur 18b: die siebte Ausgestaltung des Austragungs- und Verschlusselements in einer dreidimensionalen Darstellung;
- Figur18c: die siebte Ausgestaltung des Austragungs- und Verschlusselements in einer Schnittdarstellung in einer orthogonal zur Mittellängsachse ausgerichteten Ebene im Bereich der Austrittsöffnung.

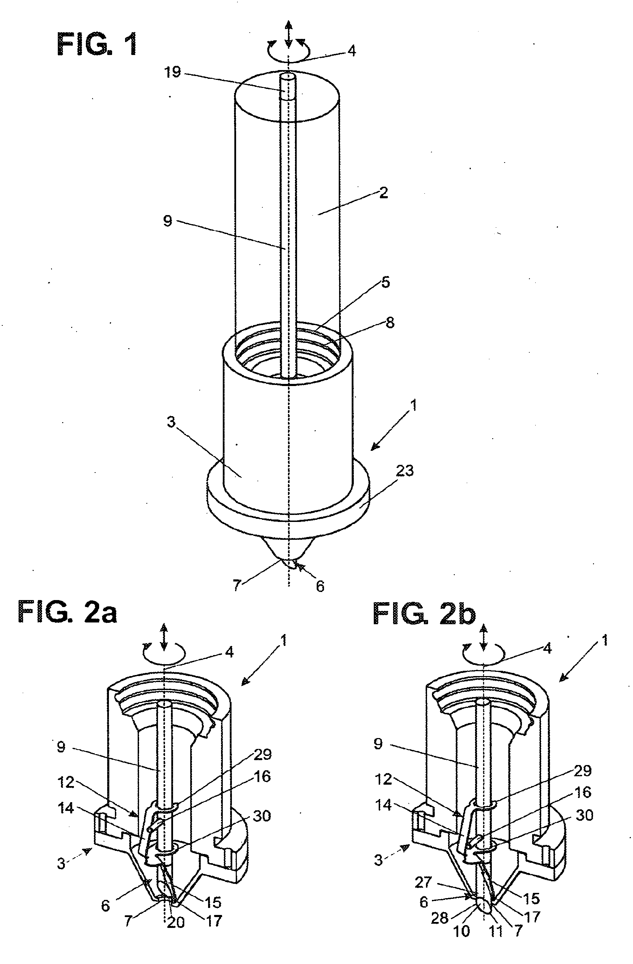

Figur 1 zeigt eine Dosiereinrichtung für pulver- oder pastenförmige Substanzen, welche einen Dosierkopf 1 und ein Entnahmegefäss 2 umfasst. Die Dosiereinrichtung ist im Wesentlichen axialsymmetrisch ausgestaltet und ist in ihrer Betriebsstellung, beispielsweise wenn dosiert werden soll, beziehungsweise im betriebsbereiten Zustand, mit ihrer Mittellängsachse 4 in vertikaler Richtung ausgerichtet. Der ein Gehäuse 3 aufweisende Dosierkopf 1 befindet sich in der Figur 1 unterhalb des Entnahmegefässes 2. Er ist auf das Entnahmegefäss 2 aufgesetzt und wurde vor dem Befüllen des Entnahmegefässes mittels eines Innengewindes 5 des Dosierkopfs 1 und eines Aussengewindes 8 des Entnahmegefässes 2 auf dieses aufgeschraubt. Der Dosierkopf kann prinzipiell in jeder aus dem Stand der Technik bekannten Weise trennbar mit dem Entnahmegefäss verbunden sein, oder auch fest mit dem Entnahmegefäss verbunden sein. Zum Zwecke einer erleichterten Reinigung ist jedoch ein aufsetz- und gegebenenfalls aufschraubbarer Dosierkopf 1 vorzuziehen.

Das Gehäuse 3 weist einen Vorsprung 23 auf, der beispielsweise dem Befestigen der Dosiereinrichtung in einem hier nicht gezeigten Halter dient. Das Gehäuse 3 verjüngt sich zur Austrittsöffnung 7 hin, wodurch die zu dosierende Substanz verbessert der Austrittsöffnung 7 zugeleitet wird. Diese Verjüngung, wenngleich bevorzugt, ist jedoch nicht zwingend notwendig.

Eine mit einem Austragungs- und Verschlusselement 6 verbundene Stange 9 durchsetzt - eine Antriebswelle bildend - das Entnahmegefäss 2 und ragt in der Figur 1 mit einem Ende aus dem Entnahmegefäss 2 heraus. Dort weist die Stange 9 einen Kupplungsbereich 19 für eine hier nicht gezeigte Antriebsvorrichtung auf, sei dies ein Handantrieb oder ein motorischer Antrieb.

In der Figur 2a ist ein Dosierkopf 1 mit einer ersten Ausführungsform eines Austragungs- und Verschlusselements 6 in dreidimensionaler Darstellung gezeigt, wobei das Gehäuse 3 des Dosierkopfs 1 der Länge nach aufgeschnitten ist. Der Dosierkopf 1 ist in der Figur 2a mit geöffneter Austrittsöffnung 7 gezeigt. Das Austragungs- und Verschlusselement 6 ist mit der Stange 9, welche sich entlang der Mittellängsachse 4 des Dosierkopfes 1 bzw. der Dosiereinrichtung erstreckt, fest verbunden. Die Stange 9 und damit das Austragungs- und Verschlusselement 6 ist sowohl um die Mittellängsachse 4 rotierbar als auch entlang dieser verschiebbar gestaltet. Dabei wird die Stange 9 vorzugsweise motorisch angetrieben.

Es versteht sich von selbst, dass das Austragungs- und Verschlusselement 6 zusammen mit der Stange 9 auch einstückig ausgebildet sein kann.

Die Figur 2b zeigt den Dosierkopf in gleicher Darstellung, wie die Figur 2a, wobei in der Figur 2b die Austrittsöffnung 7 durch das Austragungs- und Verschlusselement 6 verschlossen ist. Das Öffnen und Schliessen der Austrittsöffnung 7 erfolgt durch ein Verschieben des Austragungs- und Verschlusselements 6 entlang der Mittellängsachse 4, d.h. in den Figuren 2a und 2b in vertikaler Richtung.

Das Austragungs- und Verschlusselement 6 weist einen Verschlussbereich 27 auf, welcher zylinderförmig ausgestaltet ist und im Fall der Geschlossenstellung (siehe Figur 2b) passgenau die Austrittsöffnung 7 verschliesst. Im Fall des Dosierens, ist die Austrittsöffnung 7 entweder ganz geöffnet, wie es die Figur 2a zeigt, oder zumindest teilweise geöffnet und bildet so eine Durchtrittsöffnung, welche einer wirksamen Austrittsöffnung entspricht. Dabei ragt ein dem Verschlussbereich 27 benachbart angeordneter, der Austragung von zu dosierender Substanz dienender Austragungsbereich 28 des Austragungs- und Verschlusselements 6 in die Austrittsöffnung 7 hinein.

Der sich im betriebsbereiten Zustand der Dosiereinrichtung im unteren Bereich des Austragungs- und Verschlusselements befindende Austragungsbereich 28 weist eine Endfläche auf, welche gegenüber einer Ebene orthogonal zur Mittellängsachse schräg verläuft. Dabei wird eine Austragungsfläche 10 gebildet, wobei in der in den Figuren 2a und 2b gezeigten Ausführungsform des Austragungs- und Verschlusselements 6 der tiefstgelegene Punkt der Endfläche, eine Spitze 11 bildend, mit einem Punkt der Zylindermantelfläche zusammenfällt und der höchstgelegene Punkt ebenfalls mit einem Punkt der Zylindermantelfläche zusammenfällt.

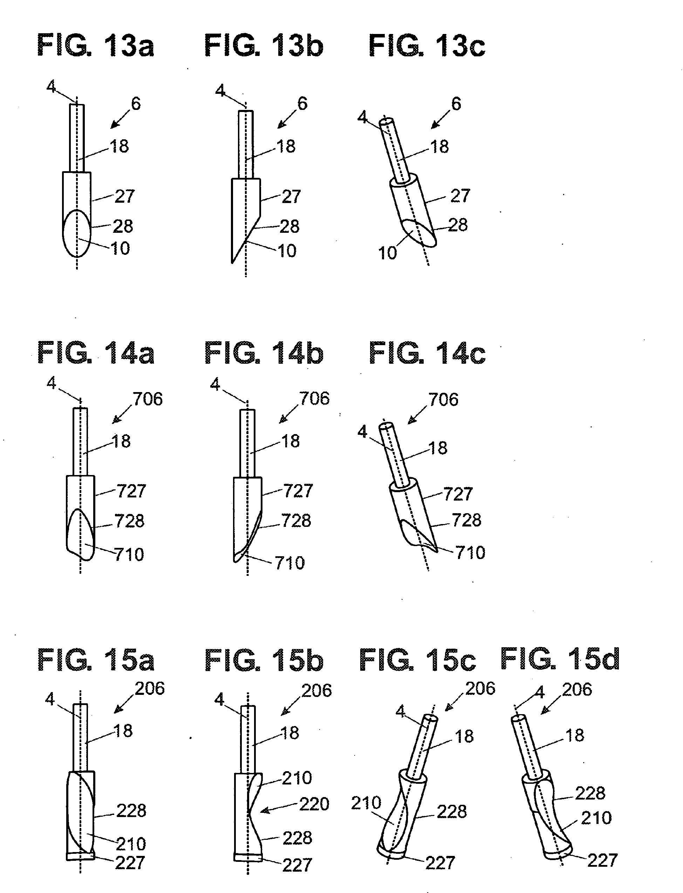

Die Austragungsfläche 10 ist in der hier gezeigten Darstellung als ebene Fläche gezeichnet. Sie kann jedoch auch als eine in einer oder in zwei Dimensionen, also orthogonal zueinander verlaufenden Richtungen, nach innen gewölbte, das heisst als konkave Fläche ausgebildet sein. Ferner ist eine Austragungsfläche denkbar, welche eine konkave Wölbung nach innen in einer beliebigen Richtung oder in zwei nicht zueinander orthogonalen Richtungen, also zwei beliebigen Richtungen, besitzt (siehe z.B. Figuren 14a bis 14c) und gegebenenfalls um die Mittellängsachse verwunden ist.

Zum Dosieren, das heisst im geöffneten Zustand der Austrittsöffnung 7 ist das Austragungs- und Verschlusselement 6 entweder vollständig aus der Austrittsöffnung 7 zurückgezogen, was einer vollständigen Offenstellung entspricht, oder es ragt mit seinem Austragungsbereich 28, also mit dem Bereich der die Austragungsfläche 10 umfasst, teilweise in die Austrittsöffnung 7 hinein und lässt die Durchtrittsöffnung für den Durchtritt der zu dosierenden Substanz frei. Um jedoch die Austrittsöffnung 7 vollständig zu verschliessen muss das Austragungs- und Verschlusselement 6 ausserhalb des Bereichs mit der Austragungsfläche 10, namentlich im Verschlussbereich 27 in die Austrittsöffnung 7 hineinragen. Dabei besitzt Letztere einen Durchmesser, der dem Durchmesser des Austragungs- und Verschlusselements 6 im Verschlussbereich 27 entspricht, so dass ein passgenaues Ein- und Ausfahren des Austragungs- und Verschlusselements 6 in die bzw. aus der Austrittsöffnung 7 und damit ein vollständiges Verschliessen derselben möglich ist. Ist das Austragungs- und Verschlusselement 6 im Austragungsbereich 28 in die Austrittsöffnung 7 eingefahren, so ist diese gegenüber der vollständigen Offenstellung verkleinert. Damit kann die Austragung von pulver- oder pastenförmiger Substanz gezielt gesteuert werden, indem jeweils der Austragungsbereich 28 des Austragungs- und Verschlusselements 6 mehr oder weniger tief in die Austrittsöffnung 7 hinein ragt und damit eine in ihrer Grösse variable Durchtrittsöffnung bildet. Für gut rieselfähiges feinkörniges Pulver kann mit dem beschriebenen Dosierkopf 1 ein Volumenstrom erreicht werden, welcher Dosierungen im Mikrogrammbereich ermöglicht. Zur Bestimmung der ausgetragenen Substanzmenge wird bevorzugt eine - hier nicht dargestellte, da nicht Gegenstand der Erfindung - Waage verwendet.

Für den Fall des Dosierens von pulverförmigen Substanzen, die eine schlechte Rieselfähigkeit besitzen, also beispielsweise pappige Pulver oder für das Dosieren pastenförmiger Substanzen, ist ein Zufuhrwerkzeug 12 innerhalb des Dosierkopfs 1 angeordnet. Dieses weist eine Haltevorrichtung auf, mit welcher es die Stange 9 an zwei übereinander angeordneten Positionen ringförmig umgreift, wodurch das Zufuhrwerkzeug 12 mit der Stange 9 lose verbunden ist. Ferner besitzt das Zufuhrwerkzeug 12 einen Rührteil 14 und ein rakel- oder schaufelförmig ausgebildetes Zufuhrelement 15. Der in den Figuren 2a und 2b gezeigte obere Haltering 29 der Haltevorrichtung des Zufuhrwerkzeugs 12 ist oberhalb eines mit der Stange 9 fest verbundenen Querbolzens 16 angeordnet, der untere Haltering 30 unterhalb des Querbolzens 16. Damit ist das Zufuhrwerkzeug 12 in der Dosiervorrichtung geführt. Beim translatorischen Verschieben der Stange 9 entlang der Mittellängsachse 4, wenn die Austrittsöffnung 7 geöffnet oder geschlossen werden soll, ist durch die lose Verbindung des Zufuhrwerkzeugs 12 mit der Stange 9 gewährleistet - hier vermittels der Schwerkraft, dass die Stange 9 gegenüber dem Zufuhrwerkzeug 12 verschiebbar ist und dieses somit stets in losem Kontakt mit der die Austrittsöffnung umgebenden Kante 20 des Gehäuses 3, im Folgenden als der Rand der Austrittsöffnung 7 bezeichnet, bleibt. Ausserdem bewirkt ein bei Rotation der Stange 9 entstehender Kontakt des Querbolzens 16 mit dem Rührteil 14, dass sich das Zufuhrwerkzeug 12 mitdreht.

Das Rührteil 14 dient der Auflockerung der zu dosierenden Substanz, während sie sich im Bereich des Dosierkopfs 1 befindet.

Das Zufuhrelement 15 befindet sich, wie bereits erwähnt, auch in der Offenstellung des Austragungs- und Verschlusselements 6 in Kontakt zum Rande der Austrittsöffnung 7, wodurch beim Drehen desselben die zu dosierende Substanz der Durchtrittsöffnung zugeführt wird, und sofern Partikel an der Austrittsöffnung 7 hängen bleiben, diese abgelöst werden und das Dosiergut ausgetragen wird. Das Zufuhrelement 15 umfasst vorzugsweise einen flächigen Bereich, der eine dem Rande der Austrittsöffnung 7 zugewandte Spitze 17 aufweist, wobei diese lose mit dem Rand der Austrittsöffnung 7 in Kontakt ist. Das Zufuhrelement 15, beziehungsweise dessen flächiger Bereich weist bevorzugt eine gekrümmte Form auf, wodurch das Zufuhrelement 15 stark koagulierendes Pulver schaufelartig mitnehmen und der Austrittsöffnung 7 zuführen kann.

Infolge der Rotation des Zufuhrwerkzeugs 12 um die Mittellängsachse 4, bewegt sich das Zufuhrelement 15 auf einer Kreisbahn. Es hat sich als vorteilhaft erwiesen, wenn die Position des Zufuhrelements 15 einen spitzen Anstellwinkel in tangentialer Richtung bezüglich seiner Kreisbahn bei Rotation um die Mittellängsachse 4 aufweist und/oder das Zufuhrelement 15 unter einem spitzen Anstellwinkel gegenüber der Mittellängsachse 4 geneigt ist. Ferner ist das Zufuhrelement 15 unter einem spitzen Winkel zum Radius seiner Kreisbahn ausgerichtet und berührt den Rand der Austrittsöffnung 7 tangential. Dort weist es eine Schneide auf zum Lösen von stark koagulierendem und dort haftendem Dosiergut vom Rand. Die Form und Ausrichtung des Zufuhrelements 15 im Zufuhrwerkzeug 12, insbesondere die erwähnten Anstellwinkel des Zufuhrelements 15, ist der Konsistenz der auszutragenden Substanz angepasst. Gegebenenfalls kann ein Zufuhrwerkzeug gegen ein anderes ausgetauscht werden. Aufgrund der Form und Ausrichtung des Zufuhrwerkzeugs 12, ist für die in den Figuren 2a und 2b gezeigten Ausführungsform der Dosiervorrichtung die Drehrichtung des Austragungs- und Verschlusselements 6, und damit hier auch des Zufuhrwerkzeugs 12, vorgegeben. Es erfolgt eine Drehung im Uhrzeigersinn.

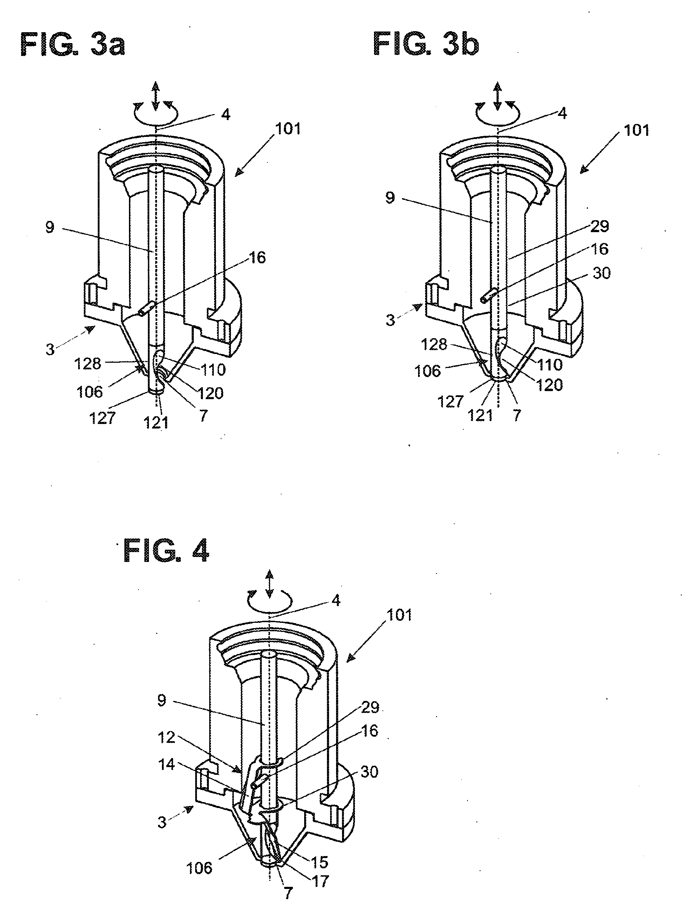

In der Figur 3a ist ein Dosierkopf 101 mit einer zweiten Ausführungsform eines Austragungs- und Verschlusselements 106 in dreidimensionaler Darstellung gezeigt, wobei das Gehäuse 3 des Dosierkopfs 101 der Länge nach aufgeschnitten ist. Die Austrittsöffnung 7 ist teilweise geöffnet. Bauteile, die mit jenen der Figuren 1 bis 2b übereinstimmen, sind mit den gleichen Bezugszeichen versehen und hier nicht noch einmal beschrieben. Das Zufuhrwerkzeug 12, wie es in den Figuren 2a und 2b zu sehen ist, wurde der Übersichtlichkeit halber hier weggelassen, der Querbolzen 16, der dem Antrieb des Zufuhrwerkzeugs 12 dient, ist zu sehen.

Im Bereich des Austragungs- und Verschlusselements 106, der bei Bewegung entlang der Mittellängsachse 4 in die Austrittsöffnung 7 ein- bzw. aus dieser ausfahrbar gestaltet ist, weist das Austragungs- und Verschlusselement 106 eine Vertiefung in Form einer Aussparung 120 auf. Die Oberfläche der Aussparung 120 ist stetig und bildet eine Austragungsfläche 110. Die Aussparung 120 liegt im Austragungsbereich 128 des in der Grundform zylindrischen Austragungs- und Verschlusselements 106 und formt diesen. Der Verschlussbereich 127 ist bei dieser Ausführungsform in der für den Betrieb angeordneten Dosiereinrichtung unterhalb des Austragungsbereichs 128 angeordnet, das heisst er bildet das äussere Ende des Austragungs- und Verschlusselements 106. Auf diese Weise kann die die Unterkante des Austragungs-und Verschlusselements 106 bildende Stirnfläche 121 die Austrittsöffnung 7 des Dosierkopfs 101 bündig abschliessen, wie in der Figur 3b gezeigt wird. Dabei besitzt die Austrittsöffnung 7 einen Durchmesser, der im Wesentlichen dem Durchmesser des Austragungs- und Verschlusselements 106 im Verschlussbereich 127 entspricht, so dass ein passgenaues Ein- und Ausfahren des Austragungs- und Verschlusselements 106 in die bzw. aus der Austrittsöffnung 7 und damit ein vollständiges Verschliessen derselben möglich ist.

Prinzipiell könnte in der gezeigten Variante des Austragungs- und Verschlusselements 106 natürlich auch die Austrittsöffnung 7 vermittels des sich oberhalb der Aussparung 120 angeordneten Bereichs des Austragungs- und Verschlusselements 106 verschlossen werden. Ein bündiges Verschliessen der Austrittsöffnung 7 wird jedoch bevorzugt, da die Gefahr von am Austragungs- und Verschlusselement hängen gebliebener Substanz damit reduziert ist.

Die Austragungsfläche 110 ist eine zumindest einfach gekrümmte, um die Mittellängsachse verwundene Fläche. Die Austragungsfläche könnte jedoch auch im Bereich der Aussparung 120 in zwei Richtungen konkav gekrümmt sein und/oder eine Verwindung um die Mittellängsachse 4 aufweisen. Die Breite sowie die Tiefe der Aussparung 120 im Austragungsbereich 128 verkleinert sich in Richtung des Verschlussbereichs 127.

Beim Verschieben des Austragungs- und Verschlusselements 106 entlang der Mittellängsachse 4 gelangt die Aussparung 120 in den Bereich der Austrittsöffnung 7, wodurch diese, die Durchtrittsöffnung bildend, teilweise geöffnet wird, so dass pulver-oder pastenförmige Substanz aus dieser Durchtrittsöffnung gelangen kann.

Eine konkave Krümmung der Austragungsfläche 110 und insbesondere eine leichte Verwindung der Aussparung 120 um die Mittellängsachse bewirkt, dass die auszutragende Substanz beim Rotieren des Austragungs- und Verschlusselements 106 gezielt von der Austragungsfläche 110 mitgenommen und ausgetragen wird. Dies ist besonders günstig im Fall von koagulierenden Substanzen, die möglicherweise bei einer Austragungsfläche 110 ohne Krümmung sich zwischen dem Rand der Austrittsöffnung 7 und der Austragungsfläche 110 festsetzen könnten und somit die Durchtrittsöffnung verstopfen könnten. Für das Austragen der Substanz ist der Drehsinn des Austragungs- und Verschlusselements 106 der Ausformung seines Austragungsbereichs128 angepasst.

Im Fall von stark koagulierenden Pulvern ist es von erheblichem Vorteil, wenn von einem Zufuhrwerkzeug 12 mit einem rakel- oder schaufelförmig ausgebildeten Zufuhrelement 15, wie es die Figur 4 in Zusammenhang mit einem Austragungs- und Verschlusselement 106 gemäss den Figuren 3a und 3b zeigt, Gebrauch gemacht wird, wobei dieses mit dem Austragungs- und Verschlusselement 106 zusammenwirkt.

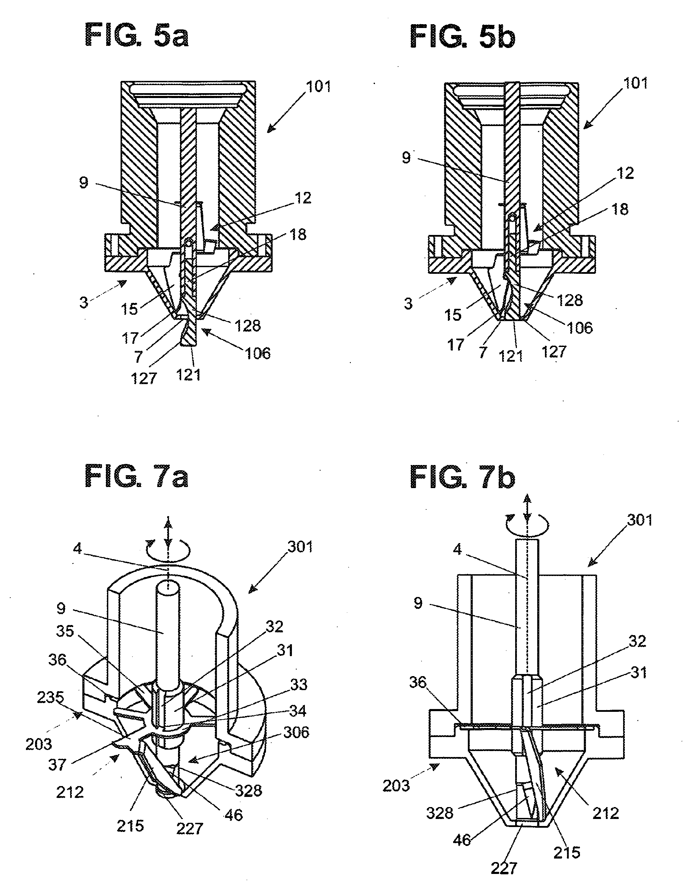

Wie bereits oben erwähnt ist das Zufuhrwerkzeug 12 derart an der Stange 9 gelagert beziehungsweise geführt, dass es sich einerseits mit dieser mit dreht, andererseits aber bei einer Verschiebung der Stange 9 entlang der Mittellängsachse relativ zu dieser bzw. zum Austragungs- und Verschlusselement seine Position beibehält, das heisst mit dem Zufuhrelement 15 insbesondere seiner Spitze 17 stets in losem Kontakt mit dem Rand der Austrittsöffnung 7 steht und so das Pulver beim Austragen gegen diesen führt, nach unten drückt und vom Rand abstreift. Dies ist in den Figuren 5a und 5b dargestellt, welche eine Schnittzeichnung des Dosierkopfs 101 zeigen.

In der für die Figuren 5a und 5b gewählten Darstellung ist auch die Verbindung des Austragungs- und Verschlusselements 106 mit der Stange 9 zu erkennen. Dabei greift ein Bolzen 18 mit gegenüber dem Durchmesser des Austragungs- und Verschlusselements 106 verringertem Durchmesser in die Stange 9 ein und ist beispielsweise mit dieser verschraubt, verklebt, verlötet oder in sonstiger Weise fest verbunden.

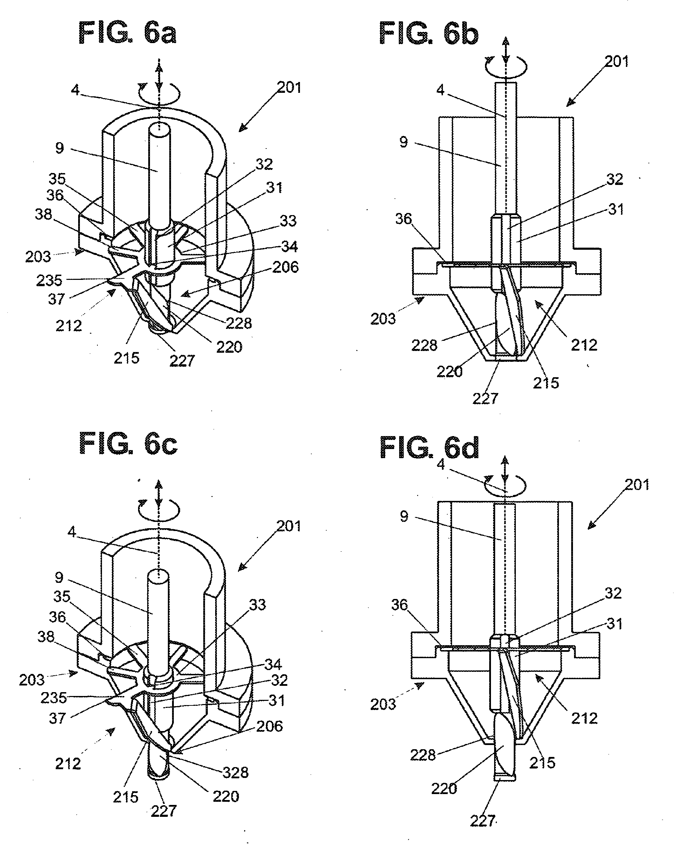

Die Figuren 6a bis 6d zeigen eine dritte Ausgestaltung des Austragungs- und Verschlusselements 206 und dessen Anordnung im Dosierkopf 201 in der Geschlossenstellung sowie in der Offenstellung. Die Figuren 6a und 6c zeigen den Dosierkopf 201 in einer perspektivischen Darstellung und die Figur 6b und 6d aus der Seitenansicht, wobei das Gehäuse 203 jeweils der Länge nach aufgeschnitten ist. Der Austragungsbereich 228 weist eine Aussparung 220 auf, die von einer konkaven Austragungsfläche 210 begrenzt ist. Die Ränder der Aussparung 220 sind nicht parallel zur orthogonal zur Mittellängsachse 4 verlaufenden Ebene ausgerichtet, sondern schliessen mit dieser einen beliebigen Winkel ein. Eine solche Aussparung 220 lässt sich vermittels eines zylindrischen Einschnitts unter einem von 90° verschiedenen Winkel zur Mittellängsachse 4 herstellen. Der Austragungsbereich 228 und der Verschlussbereich 227 weisen einen geringfügig unterschiedlichen Durchmesser auf, wodurch die Austrittsöffnung 7 hermetisch verschlossen werden kann, jedoch im geöffneten Zustand noch genügend Spiel für die Bewegung des Austragungs- und Verschlusselements 206 besitzt.

Das in den Figuren 6a bis 6d gezeigte Zufuhrwerkzeug 212 weist ein Zufuhrelement 215 auf, welches ähnlich dem in den Figuren 4, 5a und 5b gezeigten ausgestaltet ist. Insbesondere weist die Ausrichtung des Zufuhrelements 215 in Bezug auf die Mittellängsachse 4 einen spitzen Anstellwinkel in tangentialer Richtung bezüglich seiner Kreisbahn bei Rotation um die Mittellängsachse 4 auf und ist unter einem spitzen Anstellwinkel gegenüber der Mittellängsachse 4 geneigt. Ferner ist das Zufuhrelement 215 unter einem Winkel zum Radius seiner Kreisbahn angeordnet und berührt den Rand der Austrittsöffnung 7 tangential. Der Lagerung und Führung des Zufuhrwerkzeugs 212 dient ein Mitnahmebereich 31 der Stange 9, welcher mindestens eine über ihre gesamte Länge sich erstreckende Nut 32 aufweist. Um den Mitnahmebereich 31 ist ein Haltering 33 des Zufuhrwerkzeugs 212 lose angeordnet, welcher mit einem Zapfen 34 in die Nut 32 eingreift. Bevorzugt sind zwei einander gegenüber liegende Nuten 32 und Zapfen 34 vorhanden, wobei die jeweils zweiten hier in der Figur nicht zu sehen wären, da durch die Stange 9 verdeckt. Dadurch ist das Zufuhrwerkzeug 212 gezwungen, sich mit der Stange 9 mitzudrehen, ist jedoch translatorisch entlang der Mittellängsachse 4 frei beweglich. Am Haltering 33 sind mehrere strahlenförmig sich von der Mittellängsachse 4 nach aussen erstreckende Ausleger 35 angeordnet, welche mit einer Spitze 37 in eine Kreisnut 36 am Gehäuse 203 hineinragen und dort beweglich geführt sind. Weitere Ausleger ohne Spitze dienen als Rührelemente 38. Der Haltering 33, der Zapfen 34, die Ausleger 35 und die Rührelemente 38 liegen in einer Ebene orthogonal zur Mittellängsachse 4. Allerdings können die Rührelemente 38 auch nach oben oder nach unten gebogen sein und damit die Auflockerung der zu dosierenden Substanz verbessern. Mit einem Ausleger 235 ist das Zufuhrelement 215, vorzugsweise einstückig, verbunden Das Zufuhrwerkzeug 212 ist bevorzugt einstückig aus einem Blech oder aus Kunststoff hergestellt.

Eine vierte Form des die Austrittsöffnung 7 verschliessenden Austragungs- und Verschlusselements 306 ist in der Figur 7a in einer dreidimensionalen Darstellung des Dosierkopfs 301 und in der Figur 7b in der Seitenansicht zu sehen, wobei das Gehäuse 303 jeweils der Länge nach aufgeschnitten ist. Dabei ist der Austragungsbereich 328 des Austragungs- und Verschlusselements 306 als eine seitlich, das heisst aussermittig angeordnete nach unten spitz zulaufende, das heisst in ihrer Breite und Tiefe variable Kerbe 46 ausgestaltet, wobei die Breite und die Tiefe zum Verschlussbereich 227 hin abnehmen. Die Austragungsfläche ist hier unstetig. Sie erfasst beim Abfüllen die auszutragende Substanz und trägt sie vermittels Rotation aus. Dabei gewährleistet diese Form der spitz nach unten zulaufenden Kerbe 46 gleichzeitig je nach Position des Austragungs- und Verschlusselements 306 innerhalb der Austrittsöffnung 7 eine kontinuierlich variable Durchtrittsöffnung. Es können auch mehrere Kerben 46, vorzugsweise in gleichmässiger Verteilung um den Umfang des Austragungsbereichs, an diesem angeordnet sein. Das heisst der Austragungsbereich umfasst mehrere Zylinderabschnitte, an welche die Kerben 46 als Austragungsabschnitte angrenzen, beziehungsweise diese Zylinderabschnitte unterbrechend angeordnet sind. Die Kerben 46 können - wie in den Figuren 7a und 7b gezeigt - mit ihrer Spitze vertikal nach unten ausgerichtet sein oder auch schräg in den Austragungsbereich eingearbeitet sein.

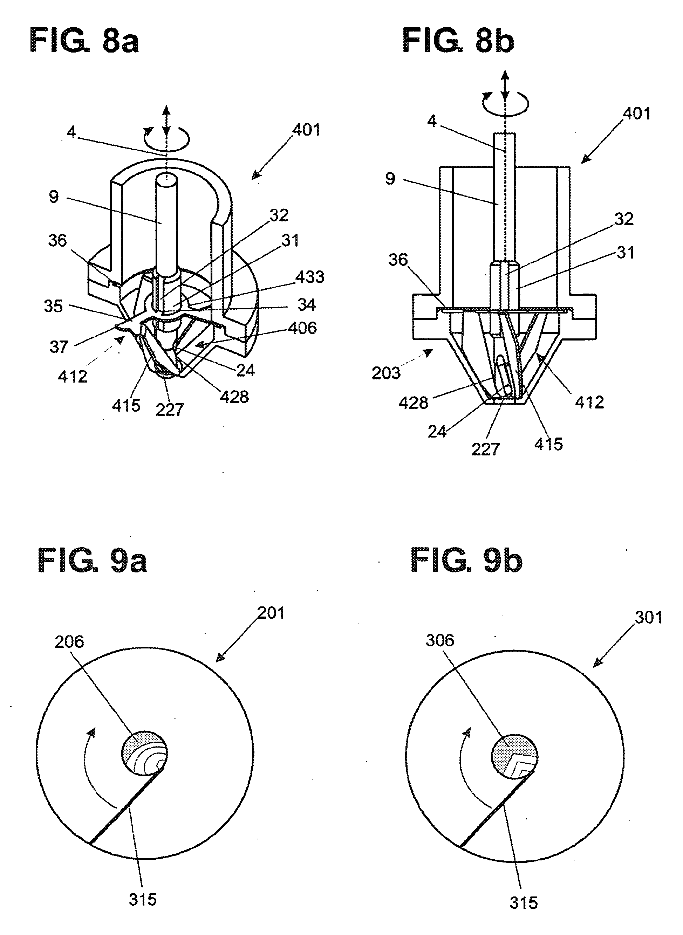

In den Figuren 8a und 8b ist ein Dosierkopf 401 in zur Figur 7 analoger Darstellung gezeigt. Dieser Dosierkopf 401 weist eine fünfte Ausführungsform des Austragungs-und Verschlusselements 406 und eine dritte Ausführungsform des Zufuhrwerkzeugs 412 auf. Das Austragungs- und Verschlusselement 406 ist in seinem Verschlussbereich 227 gestaltet, wie die dritte und vierte Ausführungsform desselben, sein Austragungsbereich 428 weist jedoch mehrere längliche Nuten 24 mit variabler Tiefe und Breite im Mantel des im wesentlichen zylinderförmig ausgestalteten Austragungs- und Verschlusselements 406 auf. Diese Nuten 24 sind in ihrer Längsausdehnung unter einem spitzen Winkel bezüglich der Mittellängsachse 4 ausgerichtet und stellen somit in geöffnetem Zustand des Austragungs- und Verschlusselements 406 mehrere Durchtrittsöffnungen für auszutragende Substanzen dar.

Das Zufuhrwerkzeug 412 besitzt drei Zufuhrelemente 415, welche einstückig mit einem Haltering 433 verbunden sind. Der Haltering 433 ist in gleicher Weise, wie bereits oben anhand der Figuren 6a bis 6d beschrieben, über einen Mitnahmebereich 31 und in dessen Nuten 32 eingreifende Zapfen 34 an der Stange 9 gelagert. Im Gegensatz zur dort dargestellten Ausführungsform, besitzt das hier gezeigte Zufuhrwerkzeug 412 keine Rührelemente 38, obwohl diese auch vorhanden sein könnten. Die Funktion der Rührens und Auflockerns der auszutragenden Substanz kann jedoch auch durch die drei Ausleger 435, sowie die drei Zufuhrelemente 415 erfüllt werden. Letztere sind im wesentlichen wie das weiter oben anhand der Figuren 4 bis 7 beschriebene Zufuhrelement 215 gestaltet und im Dosierkopf ausgerichtet. Die drei Ausleger 435, von denen jeder mit einem Zufuhrelement 415 verbunden ist, weisen eine Spitze 37 auf, welche jeweils in der Kreisnut 36 des Gehäuses 3 beweglich geführt sind.

Die Figuren 9a und 9b zeigen stark schematisiert eine Sicht von oben in den Dosierkopf 201 und 301, wobei das jeweilige Austragungs- und Verschlusselement 206, 306 im Bereich der Austrittsöffnung 7 geschnitten gezeigt ist. Dadurch wird die Form der jeweiligen Durchtrittsöffnung erkennbar. Vom Zufuhrwerkzeug ist in den Figuren 9a und 9b ein Zufuhrelement 315 sichtbar, welches der einfachen Illustration halber als ein von ebenen Flächen begrenztes Blech in der seitlichen Aufsicht gezeichnet ist. Das Zufuhrelement 315 ist unter einem spitzen Winkel zum Radius seiner Kreisbahn ausgerichtet und berührt den Rand der Austrittsöffnung 7 tangential und führt somit bei Rotation (siehe Pfeil) des Austragungs- und Verschlusselements 206, 306 sowie des Zufuhrwerkzeugs die zu auszutragende Substanz der jeweiligen Durchtrittsöffnung zu.

Wie bereits oben erwähnt, kann die Ausrichtung eines Zufuhrelements in Bezug auf die Mittellängsachse 4 auch einen spitzen Anstellwinkel in tangentialer Richtung bezüglich seiner Kreisbahn bei Rotation um die Mittellängsachse 4 aufweisen und/oder unter einem spitzen Anstellwinkel gegenüber der Mittellängsachse 4 geneigt sein, wobei diese Winkel je nach zu dosierender Substanz variiert werden können, beispielsweise durch Austausch des Zufuhrwerkzeugs im Dosierkopf.

Mittels gestrichelter Linien sind im Bereich der Austrittsöffnung 7 - von links oben nach rechts unten in der Figur - weitere eine wirksame Austrittsöffnung beziehungsweise Durchtrittsöffnung begrenzende Positionierungen des Austragungs- und Verschlusselements 206, 306 angedeutet. Es versteht sich von selbst, dass diese lediglich repräsentativ für eine kontinuierliche Variation der Durchtrittsöffnung stehen.

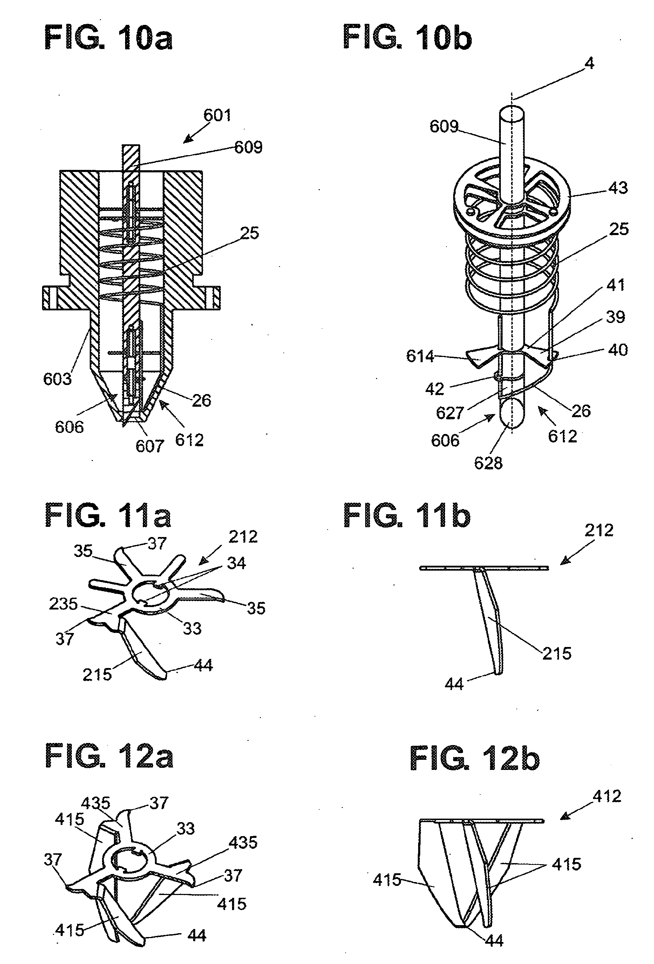

In der Figur 10a ist eine weitere Form des Dosierkopfs 601 in einer Schnittzeichnung gezeigt. Dieser ist gegenüber den vorgängig beschriebenen Ausführungsformen eines Dosierkopfs etwas verlängert und weist als Zufuhrwerkzeug 612 einen elastischen, bevorzugt mit einer Schraubfeder 25 versehenen Draht- oder Kunststoffbügel 26 auf. Letzterer ist derart geformt, dass er mit geringem Spiel der Kontur der Innenwand des Gehäuses 603 folgt und an der Austrittsöffnung 607 in einem spitzwinkligen Knick der Kontur der Stange 609 angepasst ist. Im Falle des Austragens von zu dosierender Substanz bewegt sich der Draht- oder Kunststoffbügel 26 der Rotation der Stange 609 folgend auf einer Kreisbahn. Er ist derart ausgestaltet, dass er als Zufuhrwerkzeug 612 wirkend unter einem spitzen Winkel zur Ebene seiner Kreisbahn in seiner Drehrichtung geneigt ist. Dieses Zufuhrwerkzeug 612 ist ebenfalls derart gelagert, dass es sich stets in losem Kontakt mit dem Rand der Austrittsöffnung 607 befindet, was durch die Schraubfeder 25 bewirkt wird. Das Austragungs- und Verschlusselement 606 entspricht in etwa jenem, welches in den Figuren 2a und 2b gezeigt ist und anhand dieser weiter oben beschrieben wurde.

Die Figur 10b zeigt in perspektivischer Darstellung das an der Stange 609 über die Schraubfeder 25 gelagerte Zufuhrwerkzeug 612. Der Halterung dient ein dreiflügliches Rührteil 614 (nur zwei Flügel sind sichtbar), welches fest mit der Stange 609 verbunden ist und in einem Flügel 39 zwei Ösen 40, 41 besitzt, durch welche der Draht- oder Kunststoffbügel 26 lose hindurch geführt ist. Eine weitere, den Draht- oder Kunststoffbügel 26 führende Öse 42 befindet etwas unterhalb des Rührteils 614 und ist mittels eines Rings an der Stange 609 befestigt. Die Schraubfeder 25 stützt sich von unten an einem aus zwei durchbrochenen Scheiben bestehenden Rad 43 ab, welches mit der Stange 609 verbunden ist und deren Führung im Dosierkopf 609 dient. Damit dreht sich das Zufuhrwerkzeug 612 bei Rotation der Stange mit. Im Falle einer translatorischen Verschiebung der Stange 609 und damit des Austragungs- und Verschlusselements 601 drückt die Kraft der Feder 25 , welche sowohl im geschlossenen als auch im offenen Zustand des Austragungs- und Verschlusselements 606 vorgespannt ist, das Zufuhrwerkzeug 612 gegen den Rand der Austrittsöffnung 607.

Die Figuren 11 a und 11 b zeigen das Zufuhrwerkzeug 212 aus den Figuren 6 und 7, in dreidimensionaler Darstellung aus der Sicht von schräg oben, sowie in der Seitenansicht und die Figuren 12a und 12b zeigen jenes Zufuhrwerkzeug 412, das in der Figur 8 zu sehen ist, in entsprechender Darstellung.

Das Zufuhrwerkzeug 212 besitzt ein Zufuhrelement 215, welches mit einem Ausleger 235 einstückig verbunden ist. Dieses Zufuhrelement 215 weist in seinem stets mit dem Rand der Austrittsöffnung in losem Kontakt befindlichen Bereich eine selbiger zugewandte gekrümmte Spitze 44 auf, welche die auszutragende Substanz vom Rand der Austrittsöffnung löst und dem jeweiligen Austragungs- und Verschlusselement zuführt. Der Haltering 33 ist mit zwei Zapfen 34 versehen, welche, wie anhand der Figur 6 beschrieben, in entsprechende Nuten 32 an dem um die Stange 9 angebrachte Mitnahmebereich 31 eingreifen. Dadurch ist das Zufuhrwerkzeug 212 gezwungen, sich mit der Stange 9 mitzudrehen, ist jedoch translatorisch entlang der Mittellängsachse frei beweglich.

Die in den Figuren 12a und 12b gezeigte dritte Ausführungsform des Zufuhrwerkzeugs 412 weist drei Zufuhrelemente 415 auf. Ein solches Zufuhrwerkzeug 412 ist beispielsweise besonders vorteilhaft beim Austragen von stark koagulierendem Pulver, da hiermit die Austragungsrate erhöht werden kann.

Es wird deutlich, dass ein Zufuhrelement 215, 415 ausgehend von seiner Verbindung am Zufuhrwerkzeug in Richtung seiner Spitze 44 eine Neigung in Bezug auf die Vertikale aufweist. Das heisst, das Zufuhrelement 212, 412 des Zufuhrwerkzeugs 215, 415 ist unter einem spitzen Winkel zur Ebene seiner Kreisbahn in seiner Drehrichtung geneigt. Ferner besitzt das Zufuhrwerkzeug 212, 412 eine Neigung nach aussen und ist gegenüber dem Radius des Halterings 33 um einen Winkel ausgerichtet. Dadurch und durch eine Wölbung der Fläche des Zufuhrelements 215, 415 ist die Drehrichtung im wesentlichen vorgegeben.

In der Figur 13 ist das Austragungs- und Verschlusselement 6 aus den Figuren 2a und 2b in verschiedenen Ansichten gezeigt. Dargestellt ist das Austragungs- und Verschlusselement 6 mit dem Bolzen 18 zur Befestigung in der Stange 9. Figur 13a zeigt das Austragungs- und Verschlusselement 6 von der Seite mit Blick auf die Austragungsfläche 10, Figur 13b selbiges in gegenüber der Darstellung von Figur 13a um 90° gedreht und Figur 13c das Austragungs- und Verschlusselement 6 in einer dreidimensionalen Darstellung.

Die Figur 14 zeigt eine siebte Ausgestaltung eines Austragungs- und Verschlusselements 706 mit einer Spitze, wobei der Austragungsbereich 728 eine in zwei Richtungen konkav geformte Austragungsfläche 710 besitzt. Diese Ausgestaltung der Austragungsfläche 710 hat den Vorteil, dass sie die auszutragende Substanz der Austrittsöffnung 7 zuführt. Das Austragungs- und Verschlusselement 706 ist in Figur 14 in verschiedenen Ansichten dargestellt; Figur 14a seitlich mit Blick auf die Austragungsfläche 710, Figur 14b gegenüber der Darstellung von Figur 14a um 90° gedreht, Figur 14c in einer dreidimensionalen Darstellung.

Auch hier verkleinert sich die Breite und die Tiefe der aufgrund der konkaven Ausformung des Austragungsbereichs 728 entstehenden Ausnehmung im Austragungsbereich in Richtung des Verschlussbereichs 727.

In Figur 15 ist die Ausgestaltung des Austragungs- und Verschlusselements 206, wie sie bereits anhand der Figuren 6a bist 6d beschrieben wurde, in verschiedenen Ansichten zu sehen; Figur 15a seitlich mit Blick auf die Austragungsfläche 210, Figur 15b gegenüber der Darstellung von Figur 15a um 90° gedreht, Figur 15c und Figur 15d in einer dreidimensionalen Darstellung. Die Aussparung 220 im Austragungsbereich 228 ist von einer konkaven Austragungsfläche 210 begrenzt, deren Ränder nicht parallel zur orthogonal zur Mittellängsachse 4 ausgerichteten Ebene ausgerichtet sind, sondern mit dieser einen beliebigen Winkel einschliessen. Eine solche Aussparung lässt sich vermittels eines zylindrischen Einschnitts unter einem von 90° verschiedenen Winkel zur Mittellängsachse 4 herstellen.

Aus den Figuren 15a bis 15d geht ausserdem hervor, dass der Durchmesser am Austragungsbereich 228 etwas geringer ist als am Verschlussbereich 227. Es versteht sich von selbst, dass die Austrittsöffnung 7 des Dosierkopfs einen dem Verschlussbereich 227 angepassten Durchmesser besitzt, wodurch sie hermetisch verschlossen werden kann, jedoch im geöffneten Zustand genügend Spiel für die Rotation aufweist. Diese Form eines Verschlussbereichs mit gegenüber dem jeweiligen Austragungsbereich verändertem Durchmesser ist auch für die in den vorhergehenden Figuren dargestellten Austragungs- und Verschlusselemente denkbar und realisierbar.

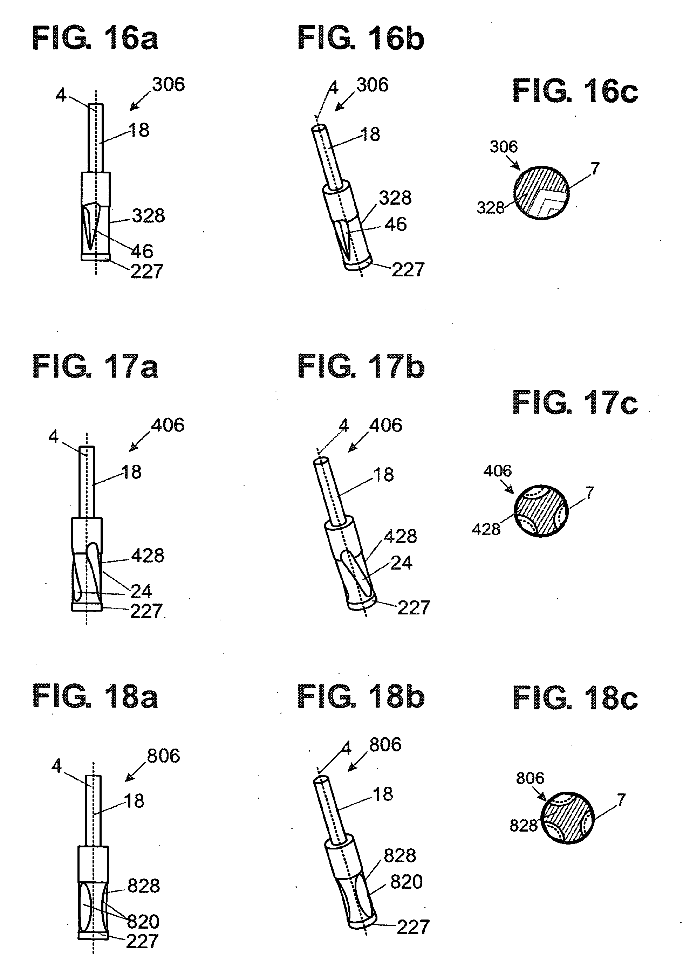

Die Figur 16 zeigt die vierte Ausgestaltung des Verschlusselements 306, wie sie in den Figuren 7a und 7b dargestellt ist, in verschiedenen Ansichten; Figur 16a seitlich mit Blick auf die Austragungsfläche, Figur 16b in einer dreidimensionalen Darstellung. Die Kerbe 46, welche im Übrigen auch schräg gegenüber der Richtung der Mittellängsachse 4 ausgerichtet sein kann, erfasst beim Abfüllen die auszutragende Substanz und führt sie vermittels Rotation der Austrittsöffnung 7 zu. Ferner gewährleistet auch diese Ausführungsform des Austragungs- und Verschlusselements 306 eine kontinuierliches Öffnen und Verschliessen der Austrittsöffnung 7. Wie die Figur 16c zeigt, die einen Schnitt durch ein Austragungs- und Verschlusselement 306 gemäss den Figuren 16a und 16b im Bereich der teilweise verschlossenen Austrittsöffnung 7 darstellt, ist der Querschnitt der Durchtrittsöffnung dreieckförmig, wobei eine Seite, namentlich, die durch den Rand der Austrittsöffnung 7 begrenzte Seite, einen Kreisbogen bildet. Selbstredend ist auch hier die Durchtrittsöffnung kontinuierlich vergrösser- und verkleinerbar. In den Figuren 16a bis 16c ist lediglich eine Kerbe 46 im Austragungsbereich 328 angeordnet. Es können jedoch auch zwei solcher Kerben 46 beispielsweise einander gegenüberliegend am Austragungs- und Verschlusselement angebracht sein. Auch hier ist, wie bereits anhand der Figur 15 beschrieben, der Durchmesser am Austragungsbereich 328 etwas geringer ist als am Verschlussbereich 327.

In der Figur 17 ist die fünfte Ausgestaltung des Austragungs- und Verschlusselements 406, wie sie in den Figuren 8a und 8b gezeigt ist, in der Ansicht 17a seitlich mit Blick auf die Austragungsfläche und in 17b in einer dreidimensionalen Darstellung zu sehen. Die in dieser Ausführungsform mehrfach angeordneten länglichen Nuten mit variabler Tiefe und Breite 24 im Mantel des im Wesentlichen zylinderförmig ausgestalteten Austragungs- und Verschlusselements 406 werden beispielsweise mittels Kugelfräsen erzeugt. Wie die Figur 17c zeigt, die einen Schnitt durch ein Austragungs- und Verschlusselement 406 gemäss den Figuren 17a und 17b im Bereich der teilweise verschlossenen Austrittsöffnung 7 darstellt, ist der Querschnitt der Durchtrittsöffnungen kontinuierlich variierbar.

Figur 18 zeigt eine siebte Ausgestaltung des Austragungs- und Verschlusselements 806, in verschiedenen Ansichten; Figur 18a seitlich mit Blick auf die Austragungsfläche, Figur 18b in einer dreidimensionalen Darstellung, Figur 18c in einer Schnittdarstellung in einer orthogonal zur Mittellängsachse ausgerichteten Ebene im Bereich der Austrittsöffnung 7. Drei längliche Aussparungen 820 mit spiegelsymmetrischen kreisabschnittförmigen Rändern sind mit ihrer Symmetrieebene parallel zur Mittellängsachse 4 verlaufend um den Austragungsbereich 828 angeordnet. Besonders deutlich wird anhand der Figur 18c, wie sich dadurch bei geöffnetem Austragungs- und Verschlusselement 806 drei Bereiche der Austrittsöffnung 7 zum Austragen der Substanz zur Verfügung stehen und durch translatorisches Verschieben des Austragungs- und Verschlusselements 806 kontinuierlich in ihrer Grösse veränderbare Durchtrittsöffnungen bilden.

Je nachdem, wie weit ein Austragungs- und Verschlusselement in die Austrittsöffnung hinein verschoben ist, kommt durch die variable Breite und Tiefe der sich in Richtung Verschlussbereich verkleinernden Aussparung eine in ihrer Grösse variable Durchtrittsöffnung zustande.

Varianten des Gehäuses des Dosierkopfs ebenso wie verschiedene Ausführungsformen des Antriebs sind vorstellbar. Prinzipiell kann das Zufuhrwerkzeug auch einen eigenen Antrieb haben und unabhängig vom Austragungs- und Verschlusselement sowohl translatorisch als auch rotatorisch bewegt werden, wobei zumindest im Falle des Austragens von zu dosierender Substanz das Zufuhrwerkzeug in losem Kontakt mit dem Rand der Austrittsöffnung ist.

Die Stange mit dem Austragungs- und Verschlusselement kann in weiterer Ausgestaltung in Richtung der Mittellängsachse vorgespannt sein, so dass bei entkoppeltem Antrieb die Austrittsöffnung selbsttätig verschlossen wird.

### Bezugszeichenliste

- 1, 101, 201, 301, 401, 601: Dosierkopf
- 2: Entnahmegefäss
- 3, 203, 303, 603: Gehäuse
- 4: Mittellängsachse
- 5: Innengewinde
- 6, 106, 206, 306, 406, 606, 706, 806: Austragungs- und Verschlusselement
- 7, 607: Austrittsöffnung
- 8: Aussengewinde
- 9, 609: Stange
- 10, 110, 210, 710: Austragungsfläche
- 11: Spitze
- 12, 212, 412, 612: Zufuhrwerkzeug
- 14: Rührteil
- 15, 215, 315, 415, 615: Zufuhrelement
- 16: Querbolzen
- 17: Spitze des Zufuhrelements
- 18: Bolzen
- 19: Kupplungsbereich
- 120, 220, 820: Aussparung
- 121: Stirnfläche
- 22: Kerbe
- 23: Vorsprung
- 24: Nut mit variabler Tiefe und Breite
- 25: Schraubfeder
- 26: Draht- oder Kunststoffbügel
- 27, 127, 227, 627, 727: Verschlussbereich
- 28, 128, 228, 328, 428, 628, 728, 828: Austragungsbereich
- 29: Oberer Haltering
- 30: Unterer Haltering
- 31: Mitnahmebereich
- 32: Nut
- 33, 433: Haltering
- 34: Zapfen
- 35, 235, 435: Ausleger
- 36: Kreisnut
- 37: Spitze
- 38: Rührelement
- 39: Flügel
- 40: Öse
- 41: Öse
- 42: Öse
- 43: Rad
- 44: Gekrümmte Spitze
- 46: Kerbe

## Patentansprüche

1. Dosiereinrichtung für pulver- oder pastenförmige Substanzen mit einem Entnahmegefäss (2) und einem damit verbindbaren oder verbundenen Dosierkopf (1, 101, 201, 301, 401, 601), der ein Gehäuse (3, 203, 303, 603) mit einer mit kreisförmigem Querschnitt versehenen Austrittsöffnung (7, 607) und ein einen dem Verschliessen der Austrittsöffnung (7, 607) dienenden Verschlussbereich (27, 127, 227, 627, 727) umfassendes Austragungs- und Verschlusselement (6, 106, 206, 306, 406, 606, 706, 806) und ein mindestens ein der Zuleitung der Substanz zur Austrittsöffnung (7, 607) dienendes Zufuhrelement (15, 215, 315, 415, 615) umfassendes Zufuhrwerkzeug (12, 212, 412, 612) aufweist, wobei die Austrittsöffnung (7, 607) und das Austragungs- und Verschlusselement (6, 106, 206, 306, 406, 606, 706, 806) auf der Mittellängsachse (4) des Dosierkopfs (1, 101, 201, 301, 401, 601) angeordnet sind; wobei das Zufuhrwerkzeug (12, 212, 412, 612) relativ zum Gehäuse (3, 203, 603) um die Mittellängsachse (4) rotierbar und damit das mindestens eine Zufuhrelement (12, 212, 412, 612) auf einer Kreisbahn um die Mittellängsachse (4) bewegbar ausgestaltet ist, und wobei das Austragungs- und Verschlusselement (6, 106, 206, 306, 406, 606, 706, 806) einen der Austragung von zu dosierender Substanz dienenden Austragungsbereich (28, 128, 228, 328, 428, 628, 728, 828) umfasst, und wobei das Austragungs- und Verschlusselement (6, 106, 206, 306, 406, 606, 706, 806) relativ zum Gehäuse (3, 203, 303, 603) um die Mittellängsachse (4) rotierbar und entlang der Mittellängsachse (4) translatorisch relativ zur Austrittsöffnung (7, 607) verschiebbar ausgestaltet ist, und wobei das mindestens eine Zufuhrelement (15, 215, 315, 415, 615) des Zufuhrwerkzeugs (12, 212, 412, 612) für das Austragen von Substanz unter einem spitzen Winkel zur Ebene seiner Kreisbahn in seiner Drehrichtung geneigt ist, wobei das mindestens eine Zufuhrelement (15, 215, 315, 415, 615) des Zufuhrwerkzeugs (12, 212, 412, 612) einen flächigen Bereich umfasst, **dadurch gekennzeichnet, dass** der flächige Bereich des mindestens einen Zufuhrelements (15, 215, 315, 415, 615) unter einem spitzen Winkel zum Radius der Kreisbahn des Zufuhrelements (15, 215, 315, 415, 615) ausgerichtet ist und den Rand der Austrittsöffnung (7, 607) tangential berührt und dass das Zufuhrwerkzeug (12, 212,412, 612) derart im Dosierkopf (1, 101, 201, 301, 401, 601) gelagert ist, dass das Austragungs- und Verschlusselement (6, 106, 206, 306, 406, 606, 706, 806) und das Zufuhrwerkzeug (12, 212, 412, 612) relativ zueinander translatorisch entlang der Mittellängsachse (4) bewegbar sind.

2. Dosiereinrichtung nach Anspruch 1, **dadurch gekennzeichnet** der flächige Bereich in einer Richtung oder in zwei Richtungen eine schaufelartige Krümmung aufweist.

3. Dosiereinrichtung nach Anspruch 1 oder 2, **dadurch gekennzeichnet, dass** der flächige Bereich des Zufuhrelements (15, 215, 315, 415, 615) unter einem spitzen Winkel gegenüber der Mittellängsachse (4) geneigt ist.

4. Dosiereinrichtung nach einem der Ansprüche 1 bis 3, **dadurch gekennzeichnet, dass** sich das Zufuhrwerkzeug (12, 212, 412, 612) im Betriebszustand der Dosiereinrichtung stets in losem Kontakt mit dem Rand der Austrittsöffnung (7, 607) befindet.

5. Dosiereinrichtung nach einem der Ansprüche 1 bis 4, **dadurch gekennzeichnet, dass** das mindestens eine Zufuhrelement (15, 215, 315, 415, 615) des Zufuhrwerkzeugs (12, 212, 412, 612) eine Spitze (17, 44) besitzt, die im Betriebszustand der Dosiereinrichtung stets mit dem Rand der Austrittsöffnung (7, 607) in losem Kontakt ist.

6. Dosiereinrichtung nach einem der Ansprüche 1 bis 5, **dadurch gekennzeichnet, dass** das mindestens eine Zufuhrelement (15, 215, 315, 415) an seiner der Austrittsöffnung (7) zugewandten Kante eine Schneide aufweist.

7. Dosiereinrichtung nach einem der Ansprüche 1 bis 6, **dadurch gekennzeichnet, dass** das Zufuhrwerkzeug (612) federnd gelagert ist.

8. Dosiereinrichtung nach einem der Ansprüche 1 bis 7, **dadurch gekennzeichnet, dass** das Austragungs- und Verschlusselement (6, 606,706) in seiner Grundform zylinderförmig ausgebildet ist und einen dem Verschliessen der Austrittsöffnung dienenden zylinderförmigen Verschlussbereich(27, 627, 727) und einen diesem benachbart angeordneten der Austragung von zu dosierender Substanz dienenden Austragungsbereich (28, 628, 728) aufweist, welcher Austragungsbereich (28, 628, 728) sich im betriebsbereitem Zustand der Dosiereinrichtung im unteren Bereich des Austragungs- und Verschlusselements (6, 606,706) befindet und die dort befindliche Endfläche gegenüber einer Ebene orthogonal zur Mittellängsachse (4) schräg verläuft, wobei der tiefstgelegene Punkt dieser Endfläche, eine Spitze (11) bildend, mit einem Punkt der Zylindermantelfläche zusammenfällt und der höchstgelegene Punkt ebenfalls mit einem Punkt der Zylindermantelfläche zusammenfällt.

9. Dosiereinrichtung nach einem der Ansprüche 1 bis 7, **dadurch gekennzeichnet, dass** das Austragungs- und Verschlusselement (106, 206, 306, 406, 806) in seiner Grundform zylinderförmig ausgebildet ist, mindestens einen dem Verschliessen der Austrittsöffnung (7) dienenden zylinderförmigen Verschlussbereich (127,227) und einen diesem benachbart angeordneten der Austragung von zu dosierender Substanz dienenden Austragungsbereich (128, 228, 328, 428, 828) mit mindestens einer vom Zylindermantel ausgehenden Vertiefung aufweist.

10. Dosiereinrichtung nach einem der Ansprüche 1 bis 7, **dadurch gekennzeichnet, dass** der Austragungsbereich des Austragungs- und Verschlusselements (6, 106, 206, 306, 406, 606, 706, 806) eine Form aufweist, die für ein sich mit seinem Austragungsbereich (28, 128, 228, 328, 428, 628, 728, 828) in der Austrittsöffnung (7) befindliches Austragungs- und Verschlusselement (6, 106, 206, 306, 406, 606, 706, 806) mindestens eine aussermittig angeordnete und nicht konzentrisch ausgebildete Durchtrittsöffnung freilässt.

11. Dosiereinrichtung nach Anspruch 9, **dadurch gekennzeichnet, dass** die mindestens eine Vertiefung durch eine Aussparung (20, 220, 820), eine Kerbe (46) und/oder eine Nut (24) gebildet wird.

12. Dosiereinrichtung nach Anspruch 9, 10 oder 11, **dadurch gekennzeichnet, dass** die Breite und/oder die Tiefe der mindestens einen Vertiefung des Austragungsbereichs (128, 228, 328, 428, 728, 828) sich in Richtung zum Verschlussbereich (127, 227, 727) verkleinernd variiert.

13. Dosiereinrichtung nach einem der Ansprüche 1 bis 12, **dadurch gekennzeichnet, dass** das Austragungs- und Verschlusselement (6, 106, 206, 306, 406, 606, 706, 806) mit einer entlang der Mittellängsachse (4) angeordneten Stange (9, 609), welche das Entnahmegefäss (2) als Antriebswelle durchdringt, verbunden ist.

14. Dosiereinrichtung nach Anspruch 13, **dadurch gekennzeichnet, dass** das Zufuhrwerkzeug (12, 212, 412, 612) an der Stange (9, 609) und relativ zu dieser translatorisch entlang der Mittellängsachse (4) verschiebbar gelagert und/oder geführt ist.

15. Dosiereinrichtung nach Anspruch 14, **dadurch gekennzeichnet, dass** das Zufuhrwerkzeug (12) eine Haltevorrichtung aufweist, mit welcher es die Stange (9) an zwei übereinander angeordneten Positionen ringförmig umgreift, wodurch das Zufuhrwerkzeug (12) mit der Stange (9) lose verbunden ist.

16. Dosiereinrichtung nach Anspruch 15, **dadurch gekennzeichnet, dass** die Stange (9) mit mindestens einer sich über einen Teil ihrer Länge sich erstreckenden Nut (32) versehen ist und dass das Zufuhrwerkzeug (212, 412) einen Haltering (33) besitzt, der lose um den mit der Nut versehenen Teil der Stange (9) angeordnet ist und mit zwei Zapfen (34) in die Nut (32) eingreift.

17. Dosiereinrichtung nach einem der Ansprüche 1 bis 16 **dadurch gekennzeichnet, dass** das Austragungs- und Verschlusselement und das Zufuhrwerkzeug unabhängig von einander bewegbar beziehungsweise antreibbar sind.

18. Dosiereinrichtung nach einem der Ansprüche 1 bis 17 **dadurch gekennzeichnet, dass** das Gehäuse (3, 203, 303 603) sich in Richtung zur Austrittsöffnung (7, 607) verjüngt.

## Claims

1. Dosage-dispensing device for substances in powder- or paste form with a supply container (2) and with a dosage-dispensing head (1, 101, 201, 301, 401, 601) that is connected or connectable to the supply container (2), said dosage-dispensing head comprising a housing (3, 203, 303, 603) with an outlet orifice (7, 607) of circular cross-section and a delivery- and closure element (6, 106, 206, 306, 406, 606, 706, 806) with a closure portion (27, 127, 227, 627, 727) serving to close off the outlet orifice (7, 607), and further comprising a conveying tool (12, 212, 412, 612) with at least one conveying element (15, 215, 315, 415, 615) that serves to direct the substance to the outlet orifice (7, 607), wherein the outlet orifice (7, 607) and the delivery- and closure element (6, 106, 206, 306, 406, 606, 706, 806) are arranged on the central lengthwise axis (4) of the dosage-dispensing head (1, 101, 201, 301, 401, 601), and wherein the conveying tool (12, 212, 412, 612) is rotatable about the central lengthwise axis (4) in relation to the housing (3, 203, 603) and the at least one conveying element (15, 215, 315, 415, 615) is thus designed to move on a circular path about the central lengthwise axis (4), and wherein the delivery- and closure element (6, 106, 206, 306, 406, 606, 706, 806) comprises a delivery portion (28, 128, 228, 328, 428, 528, 628, 728, 828) which serves to deliver substance that is to be dispensed, and wherein the delivery- and closure element (6, 106, 206, 306, 406, 606, 706, 806) is designed to be rotatable about the central lengthwise axis (4) in relation to the housing (3, 203, 303, 603) and to be capable of translatory displacement along the central lengthwise axis (4) relative to the outlet orifice (7, 607), and wherein further the at least one conveying element (15, 215, 315, 415, 615) of the conveying tool (12, 212, 412, 612), to perform its function of delivering substance, is slanted in the direction of its rotation at an acute angle to the plane of its circular path, and the at least one conveying element (15, 215, 315, 415, 615) of the conveying tool (12, 212, 412, 612) has an extensive smooth surface portion, **characterized in that** the extensive smooth surface portion of the at least one conveying element (15, 215, 315, 415, 615) is oriented at an acute angle to the radius of the circular path of the conveying element (15, 215, 315, 415, 615) and tangentially touches the rim of the outlet orifice (7, 607), and that the conveying tool (12, 212, 412, 612) is constrained in the dosage-dispensing head (1, 101, 201, 301, 401, 601) in such a way that the delivery- and closure element (6, 106, 206, 306, 406, 606, 706, 806) and the conveying tool (12, 212, 312, 412, 612) are capable of translatory movement relative to each other along the central lengthwise axis (4).

2. Dosage-dispensing device according to claim 1, **characterized in that** the extensive smooth surface portion has a curvature in one direction or in two directions, giving it a shape that is comparable to a shovel.

3. Dosage-dispensing device according to claim 1 or 2, **characterized in that** the extensive smooth surface portion of the conveying element (15, 215, 315, 415, 615) is slanted at an acute angle relative to the central lengthwise axis (4).

4. Dosage-dispensing device according to one of the claims 1 to 3, **characterized in that** in the operating condition of the dosage-dispensing device the conveying tool (12, 212, 412, 612) is always in loose contact with the rim of the outlet orifice (7, 607).

5. Dosage-dispensing device according to one of the claims 1 to 4, **characterized in that** the at least one conveying element (15, 215, 315, 415, 615) of the conveying tool (12, 212, 312, 412, 612) comprises a tip (17, 44) which in the operating condition of the dosage-dispensing device is always in loose contact with the rim of the outlet orifice (7, 607).

6. Dosage-dispensing device according to one of the claims 1 to 5, **characterized in that** the at least one conveying element (15, 215, 315, 415) has a sharp edge at the border of the conveying element that faces toward the outlet orifice (7).

7. Dosage-dispensing device according to one of the claims 1 to 6, **characterized in that** the conveying tool (612) is held in an elastically resilient manner.

8. Dosage-dispensing device according to one of the claims 1 to 7, **characterized in that** the delivery- and closure element (6, 606, 706) in its basic configuration is of a cylindrical shape and has a cylindrical closure portion (27, 627, 727) that serves to close off the outlet orifice and, adjacent to the closure portion, a delivery portion (28, 628, 728) that serves to deliver the substance to be dispensed, wherein when the dosage-dispensing device is in its operating state, the delivery portion (28, 628, 728) is located in the lower part of the delivery- and closure element (6, 606, 706), said lower part having an end surface that is inclined at an oblique angle relative to a plane that extends orthogonal to the central lengthwise axis (4), wherein said end surface at its lowest point forms a tip (11) that coincides with a point of the cylinder wall surface, and the topmost point likewise coincides with a point of the cylinder wall surface.

9. Dosage-dispensing device according one of the claims 1 to 7, **characterized in that** the delivery- and closure element (106, 206, 306, 406, 806) in its basic configuration is of a cylindrical shape and has a cylindrical closure portion (127, 227) that serves to close off the outlet orifice (7) and further has, adjacent to the closure portion, a delivery portion (128, 228, 328, 428, 828) that serves to deliver the substance to be dispensed, wherein said delivery portion has at least one indentation that is recessed from the cylinder wall surface.

10. Dosage-dispensing device according to one of the claims 1 to 7, **characterized in that** the delivery portion of the delivery- and closure element (106, 206, 306, 406, 806) is configured with such a shape that when the delivery portion (28, 128, 228, 328, 428, 628, 728, 828) of the delivery- and closure element (6, 106, 206, 306, 406, 606, 706, 806) is positioned in the outlet orifice (7), at least one passage opening is left free which is located away from the center and is of a non-concentric configuration.

11. Dosage-dispensing device according to claim 9, **characterized in that** the at least one indentation is formed by a recess (20, 220, 820), a notch (46), and/or a groove (24).

12. Dosage-dispensing device according to claim 9, 10 or 11, **characterized in that** the width and/or the depth of the at least one indentation of the delivery portion (128, 228, 328, 428, 728, 828) vary in such a way that the profile of the indention gets smaller in the direction towards the closure portion (127, 227, 727).

13. Dosage-dispensing device according to one of the claims 1 to 12, **characterized in that** the delivery- and closure element (6, 106, 206, 306, 406, 606, 706, 806) is connected to a rod (9, 609) that is arranged along the central lengthwise axis (4) and traverses the supply container (2) as a drive shaft.

14. Dosage-dispensing device according to claim 13, **characterized in that** the conveying tool (12, 212, 412, 612) is constrained to and/or guided by the rod (9, 609) in a manner that allows translatory movement of the conveying tool relative to the rod along the central lengthwise axis (4).

15. Dosage-dispensing device according to claim 14, , **characterized in that** the conveying tool (12) has a holder device with ring-shaped holders embracing the rod (9) in two positions above each other, whereby the conveying tool (12) is loosely connected to the rod (9).

16. Dosage-dispensing device according to claim 15, **characterized in that** the rod (9) has a groove (32) extending at least over part of the length of the rod (9), and that the conveying tool (212, 412) has a holder ring (33) arranged to loosely surround the part of the rod (9) that carries the groove and to engage the groove (32) with two projections (34).

17. Dosage-dispensing device according to one of the claims 1 to 16, **characterized in that** the delivery- and closure element and the conveying tool are designed to be moved or driven independently of each other.

18. Dosage-dispensing device according to one of the claims 1 to 17, **characterized in that** the housing (3, 203, 303, 603) is shaped with a narrowing taper in the direction towards the outlet orifice (7, 607).

## Revendications

1. Dispositif de dosage pour substances sous forme de poudre ou de pâte, avec un récipient de prélèvement (2) et une tête de dosage (1, 101, 201, 301, 401, 601) reliée ou apte à être reliée à celui-ci, laquelle comporte un logement (3, 203, 303, 603) avec une ouverture de sortie (7, 607) pourvue d'une section transversale circulaire, et un élément de décharge et de fermeture (6, 106, 206, 306, 406, 606, 706, 806) comprenant une région de fermeture (27, 127, 227, 627, 727) servant à fermer l'ouverture de sortie (7, 607), et un outil d'alimentation (12, 212, 412, 612) comprenant au moins un élément d'alimentation (15, 215, 315, 415, 615) servant à alimenter la substance vers l'ouverture de sortie (7, 607), dans lequel l'ouverture de sortie (7, 607) et l'élément de décharge et de fermeture (6, 106, 206, 306, 406, 606, 706, 806) sont agencés sur l'axe longitudinal médian (4) de la tête de dosage (1, 101, 201, 301, 401, 601) ; dans lequel l'outil d'alimentation (12, 212, 412, 612) peut tourner autour de l'axe longitudinal médian (4) par rapport au logement (3, 203, 603), et l'au moins un élément d'alimentation (12, 212, 412, 612) est conçu de manière à pouvoir se déplacer sur une voie circulaire autour de l'axe longitudinal médian (4), et dans lequel l'élément de décharge et de fermeture (6, 106, 206, 306, 406, 606, 706, 806) comprend une région de décharge (28, 128, 228, 328, 428, 628, 728, 828) servant à décharger une substance à doser, et dans lequel l'élément de décharge et de fermeture (6, 106, 206, 306, 406, 606, 706, 806) peut tourner autour de l'axe longitudinal médian (4) par rapport au logement (3, 203, 303, 603), tout en étant conçu de manière à pouvoir coulisser par translation le long de l'axe longitudinal médian (4) par rapport à l'ouverture de sortie (7, 607), et dans lequel l'au moins un élément d'alimentation (15, 215, 315, 415, 615) de l'outil d'alimentation (12, 212, 412, 612) est incliné dans sa direction de rotation pour décharger la substance selon un angle aigu par rapport au plan de sa voie circulaire, dans lequel l'au moins un élément d'alimentation (15, 215, 315, 415, 615) de l'outil d'alimentation (12, 212, 412, 612) comprend une surface étendue, **caractérisé en ce que** la surface étendue de l'au moins un élément d'alimentation (15, 215, 315, 415, 615) est orientée selon un angle aigu par rapport au rayon de la voie circulaire de l'élément d'alimentation (15, 215, 315, 415, 615) et touche le bord de l'ouverture de sortie (7, 607) de façon tangentielle, et **en ce que** l'outil d'alimentation (12, 212, 412, 612) est monté de telle façon dans la tête de dosage (1, 101, 201, 301, 401, 601), que l'élément de décharge et de fermeture (6, 106, 206, 306, 406, 606, 706, 806) et l'outil d'alimentation (12, 212, 412, 612) sont déplaçables l'un par rapport à l'autre par translation le long de l'axe longitudinal médian (4).

2. Dispositif de dosage selon la revendication 1, **caractérisé en ce que** la surface étendue comporte une courbure du genre pelle dans une direction ou dans deux directions.

3. Dispositif de dosage selon la revendication 1 ou 2, **caractérisé en ce que** la surface étendue de l'élément d'alimentation (15, 215, 315, 415, 615) est inclinée selon un angle aigu par rapport à l'axe longitudinal médian (4).

4. Dispositif de dosage selon l'une des revendications 1 à 3, **caractérisé en ce que** l'outil d'alimentation (12, 212, 412, 612) est toujours en contact lâche avec le bord de l'ouverture de sortie (7, 607) dans l'état de fonctionnement du dispositif de dosage.

5. Dispositif de dosage selon l'une des revendications 1 à 4, **caractérisé en ce que** l'au moins un élément d'alimentation (15, 215, 315, 415, 615) de l'outil d'alimentation (12, 212, 412, 612) possède une pointe (17, 44), laquelle est toujours en contact lâche avec le bord de l'ouverture de sortie (7, 607) dans l'état de fonctionnement du dispositif de dosage.

6. Dispositif de dosage selon l'une des revendications 1 à 5, **caractérisé en ce que** l'au moins un élément d'alimentation (15, 215, 315, 415, 615) comporte un tranchant sur son arête tournée vers l'ouverture de sortie (7).

7. Dispositif de dosage selon l'une des revendications 1 à 6, **caractérisé en ce que** l'outil d'alimentation (612) est monté de façon élastique.

8. Dispositif de dosage selon l'une des revendications 1 à 7, **caractérisé en ce que** l'élément de décharge et de fermeture (6, 606, 706) est conçu de manière cylindrique dans sa forme de base, et comporte une région de fermeture (27, 627, 727) cylindrique servant à fermer l'ouverture de sortie, ainsi qu'une région de décharge (28, 628, 728) adjacente à celle-ci, servant à décharger une substance à doser, ladite région de décharge (28, 628, 728) se trouvant dans la région inférieure de l'élément de décharge et de fermeture (6, 606, 706) dans l'état prêt à l'emploi du dispositif de dosage, où la surface terminale s'étend de façon oblique par rapport à un plan orthogonal à l'axe longitudinal médian (4), dans lequel le point le plus bas de cette surface terminale coïncide avec un point de la surface d'enveloppe de cylindre, en formant une pointe (11), et le point le plus haut coïncide également avec un point de la surface d'enveloppe de cylindre.

9. Dispositif de dosage selon l'une des revendications 1 à 7, **caractérisé en ce que** l'élément de décharge et de fermeture (106, 206, 306, 406, 806) est conçu de façon cylindrique dans sa forme de base, et comporte au moins une région de fermeture (127, 227) cylindrique servant à fermer l'ouverture de sortie (7) ainsi qu'une région de décharge (128, 228, 328, 428, 828) adjacente à celle-ci, servant à décharger une substance à doser, avec au moins un creux partant de l'enveloppe de cylindre.

10. Dispositif de dosage selon l'une des revendications 1 à 7, **caractérisé en ce que** la région de décharge de l'élément de décharge et de fermeture (6, 106, 206, 306, 406, 606, 706, 806) présente une forme permettant de dégager au moins une ouverture de passage formée de façon non-concentrique et agencée de façon excentrée, pour un élément de décharge et de fermeture (6, 106, 206, 306, 406, 606, 706, 806) situé dans l'ouverture de sortie (7) avec sa région de décharge (28, 128, 228, 328, 428, 628, 728, 828).

11. Dispositif de dosage selon la revendication 9, **caractérisé en ce que** l'au moins un creux est formé par un évidement (20, 220, 820), une encoche (46) et/ou une rainure (24).

12. Dispositif de dosage selon la revendication 9, 10 ou 11, **caractérisé en ce que** la largeur et/ou la profondeur de l'au moins un creux de la région de décharge (128, 228, 328, 428, 728, 828) varie en se rétrécissant dans la direction allant vers la région de fermeture (127, 227, 727).

13. Dispositif de dosage selon l'une des revendications 1 à 12, **caractérisé en ce que** l'élément de décharge et de fermeture (6, 106, 206, 306, 406, 606, 706, 806) est relié à une barre (9, 609) agencée le long de l'axe longitudinal médian (4), laquelle traverse le récipient de prélèvement (2) en tant qu'arbre d'entraînement.

14. Dispositif de dosage selon la revendication 13, **caractérisé en ce que** l'outil d'alimentation (12, 212, 412, 612) est guidé sur la barre (9, 609), tout en étant guidé et/ou agencé de façon déplaçable par rapport à celle-ci, par translation le long de l'axe longitudinal médian (4).

15. Dispositif de dosage selon la revendication 14, **caractérisé en ce que** l'outil d'alimentation (12) comporte un dispositif de maintien lui permettant d'encercler la barre (9) de façon annulaire en deux positions superposées, reliant ainsi de façon lâche l'outil d'alimentation (12) avec la barre (9).

16. Dispositif de dosage selon la revendication 15, **caractérisé en ce que** la barre (9) est pourvue d'au moins une rainure (32) s'étendant sur une partie de sa longueur, et **en ce que** l'outil d'alimentation (212, 412) possède un anneau de maintien (33) agencé de façon lâche autour de la partie de la barre (9) pourvue de la rainure et s'engageant dans la rainure (32) avec deux tétons (34).

17. Dispositif de dosage selon l'une des revendications 1 à 16, **caractérisé en ce que** l'élément de décharge et de fermeture et l'outil d'alimentation peuvent être déplacés ou actionnés indépendamment l'un de l'autre.

18. Dispositif de dosage selon l'une des revendications 1 à 17, **caractérisé en ce que** le logement (3, 203, 303, 603) se rétrécit dans la direction de l'ouverture de sortie (7, 607).
